# EUROPEAN PATENT SPECIFICATION

(11) **EP 4 421 584 B1**
(45) Date of publication and mention of the grant of the patent: **26.11.2025**
(21) Application number: 22895886.4
(22) Date of filing: 26.10.2022
(51) Int. Cl.: G06F 1/16, G06F 1/20, G05B 19/04, G06F 1/3203, G06F 1/3212, H04M 1/02

(54) **ROLLABLE ELECTRONIC DEVICE COMPRISING SWITCHING PORTION**
ROLLBARE ELEKTRONISCHE VORRICHTUNG MIT SCHALTABSCHNITT
DISPOSITIF ÉLECTRONIQUE ENROULABLE COMPRENANT UNE PARTIE DE COMMUTATION

(30) Priority: 17.11.2021 KR 20210158875
(43) Date of publication of application: 28.08.2024
(73) Proprietor: Samsung Electronics Co., Ltd., Suwon-si, Gyeonggi-do 16677 (KR)
(72) Inventor: KIM, Junhyuk, Suwon-si Gyeonggi-do 16677 (KR); KWAK, Myunghoon, Suwon-si Gyeonggi-do 16677 (KR); KANG, Hyunggwang, Suwon-si Gyeonggi-do 16677 (KR); LEE, Seungjoon, Suwon-si Gyeonggi-do 16677 (KR); JEONG, Hoyoung, Suwon-si Gyeonggi-do 16677 (KR); CHO, Hyoungtak, Suwon-si Gyeonggi-do 16677 (KR); KIM, Yangwook, Suwon-si Gyeonggi-do 16677 (KR); HEO, Changryong, Suwon-si Gyeonggi-do 16677 (KR)
(74) Representative: Appleyard Lees IP LLP
(86) International application number: PCT/KR2022/016435
(87) International publication number: WO 2023/090678

(56) References cited:
- KR-A- 20140 003 132
- KR-A- 20170 003 738
- KR-A- 20200 129 645
- KR-B1- 102 163 258
- US-A1- 2018 129 251

## Description

### Technical Field

Various embodiments of the disclosure relate to a rollable electronic device including a switching unit.

### Background Art

The development of information and communication technology and semiconductor technology has led to the integration of various functions into a single portable electronic device. For example, electronic devices may implement not only communication functions, but also entertainment functions such as games, multimedia functions such as music/video playback, communication and security functions for mobile banking, calendar management, and electronic wallet functions. These electronic devices are being miniaturized so that they may be conveniently carried by users.

As mobile communication services are expanded to include multimedia services, there is a need to have a sufficient size of the display of an electronic device in order for a user to fully use multimedia services as well as use voice calls and short messages. However, the size of the display of an electronic device is in a trade-off relationship with the miniaturization of the electronic device. KR20200129645A describes an electronic device including a slide body.

### Detailed Description of the Invention

### Technical Solution

According to an embodiment of the disclosure, an electronic device includes a housing including a first housing and a second housing accommodating at least a portion of the first housing and configured to guide sliding of the first housing, a display configured to be at least partially foldable based on sliding of the first housing, a motor unit disposed within the housing, a power transmission unit disposed within the housing, and including a gear assembly configured to receive at least a portion of a driving force generated by the motor unit and a gear housing configured to rotate together with at least a portion of the gear assembly, a switching unit disposed within the housing and configured to control a rotation of the gear housing, a sensor module configured to detect at least one of an internal operation state of the electronic device, an external environmental state, or a user input provided to the electronic device, and a processor configured to adjust a connection state between the switching unit and the gear housing based on the state or input detected by the sensor module.

According to an embodiment of the disclosure, an electronic device includes a housing including a first housing and a second housing accommodating at least a portion of the first housing and configured to guide sliding of the first housing, a display configured to be at least partially unfolded based on movement of the first housing, a motor unit disposed within the housing and configured to generate a first driving force for moving the display, a first shaft connected to the motor unit and configured to rotate around a first rotation axis, a first gear connected to the first shaft, a second shaft spaced apart from the first shaft and configured to rotate around the first rotation axis, a third gear connected to the second shaft, at least one second gear meshed with the first gear and the third gear, and a gear shaft connected to the at least one second gear to be rotatable around a second rotation axis perpendicular to the first rotation axis, a gear housing connected to the gear shaft, and a switching unit configured to contact the gear housing or to be spaced from the gear housing. When the switching unit is in a first state, a portion of the first driving force is configured to be transmitted to the third gear, and when the switching unit is in a second state, the first gear is configured to rotate independently of the third gear.

According to an embodiment of the disclosure, an electronic device includes a housing, a motor unit connected to a first shaft, a second shaft spaced apart from the first shaft, a switching unit configured to control transmission of power generated by the motor unit from the first shaft to the second shaft by at least partially moving, a power transmission unit configured to transmit the power generated by the motor unit to the second shaft using the first shaft, based on the movement of the switching unit, a display configured to be unfolded based on movement of the housing configured to at least partially move based on rotation of the second shaft, when the power generated by the motor unit is transmitted to the second shaft through the power transmission unit, a sensor module configured to detect a user input provided to the electronic device, and a processor configured to control the switching unit based on the user input.

### Brief Description of Drawings

FIG. 1 is a block diagram illustrating an electronic device in a network environment according to an embodiment of the disclosure.
FIG. 2 is a diagram illustrating an electronic device in a closed state according to an embodiment of the disclosure.
FIG. 3 is a diagram illustrating an electronic device in an opened state according to an embodiment of the disclosure.
FIG. 4 is an exploded perspective view illustrating an electronic device according to an embodiment of the disclosure.
FIG. 5 is a projection view illustrating the interior of an electronic device in a closed state according to an embodiment of the disclosure.
FIG. 6 is a projection view illustrating the interior of an electronic device in an opened state according to an embodiment of the disclosure.
FIG. 7 is a diagram illustrating a connection relationship between a motor unit and a power transmission unit according to an embodiment of the disclosure.
FIGS. 8A and 8B are perspective views illustrating a power transmission unit according to an embodiment of the disclosure.
FIG. 9A is a diagram illustrating a connection state between a switching unit and a power transmission unit in an automatic state according to an embodiment of the disclosure. FIG. 9B is a diagram illustrating a connection state between the switching unit and the power transmission unit in a manual state according to an embodiment of the disclosure.
FIG. 10 is a diagram illustrating the interior of an electronic device including a deformable member according to an embodiment of the disclosure.
FIG. 11A is a diagram illustrating a connection state between a switching unit and a power transmission unit in an automatic state according to an embodiment of the disclosure, and FIG. 11B is a diagram illustrating a connection state between the switching unit and the power transmission unit in a manual state according to an embodiment of the disclosure.
FIGS. 12 and 13 are diagrams illustrating an operation of a power transmission unit in a second state according to an embodiment of the disclosure.
FIG. 14 is a projection view illustrating the interior of an electronic device including a switching unit including a fourth gear in a closed state according to an embodiment of the disclosure.

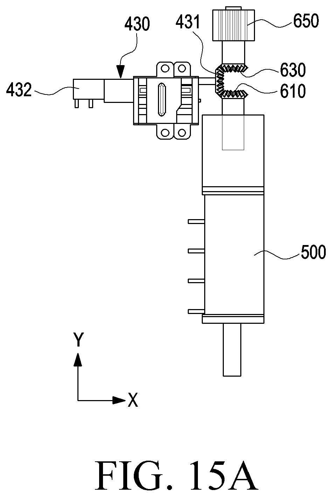

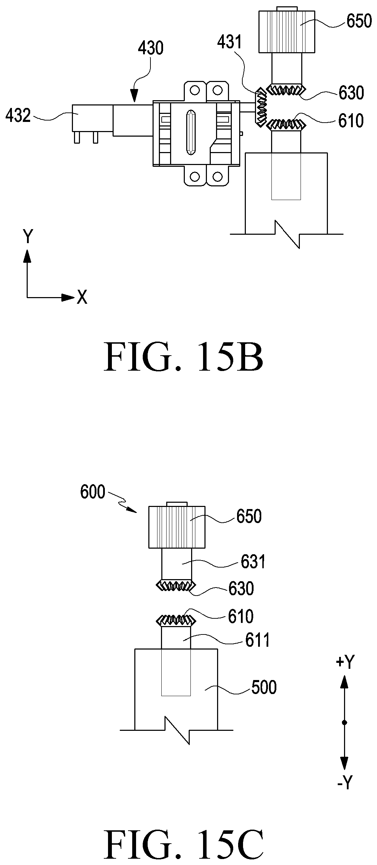

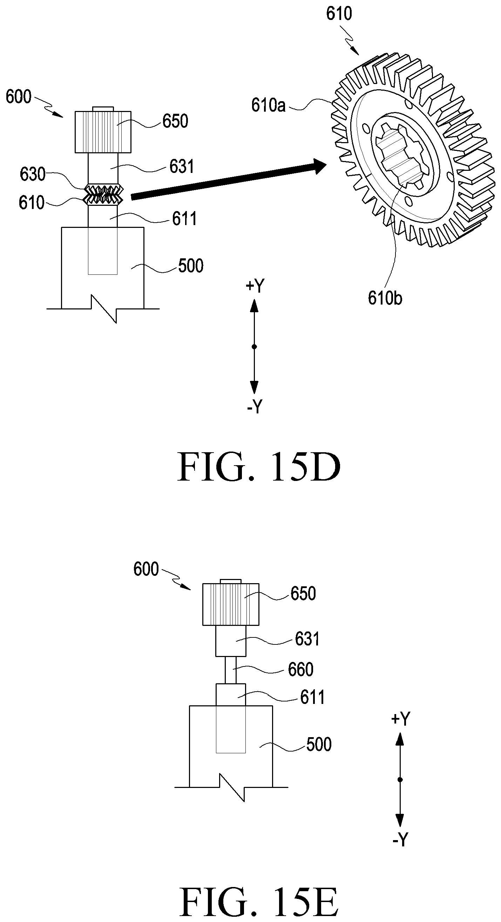

FIG. 15A is an enlarged view illustrating an electronic device in a first state according to an embodiment of the disclosure, FIG. 15B is an enlarged view illustrating the electronic device in a second state according to an embodiment of the disclosure, FIG. 15C is a diagram illustrating a connection relationship between a first gear and a third gear according to an embodiment of the disclosure, FIG. 15D is a diagram illustrating a connection relationship between the first gear and the third gear according to another embodiment of the disclosure, and FIG. 15E is a diagram illustrating a connection relationship between the first gear and the third gear according to another embodiment of the disclosure.
FIG. 16 is a flowchart illustrating an operation of switching an operation mode of an electronic device according to an embodiment of the disclosure.
FIGS. 17A and 17B are schematic diagrams illustrating an operation of switching an operation state of an electronic device according to an embodiment of the disclosure.

### Mode for Carrying out the Invention

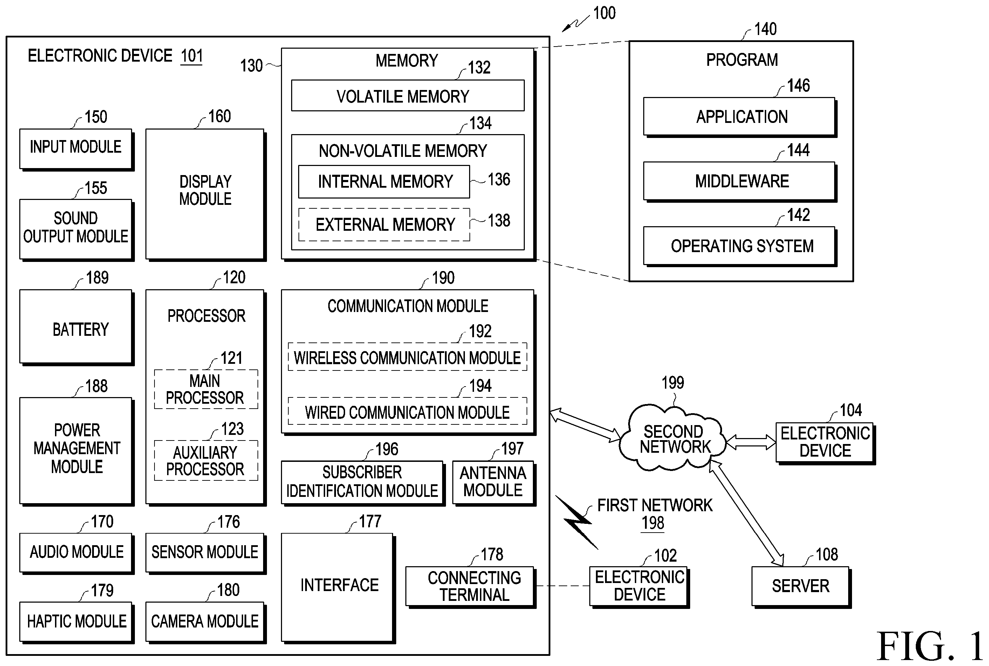

FIG. 1 is a block diagram illustrating an electronic device in a network environment according to various embodiments.

Referring to FIG. 1, an electronic device 101 in a network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

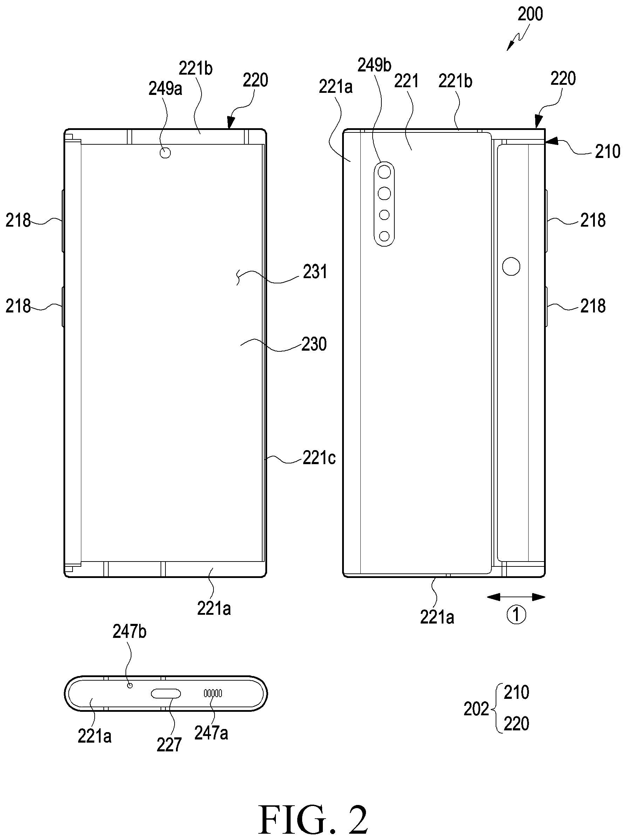

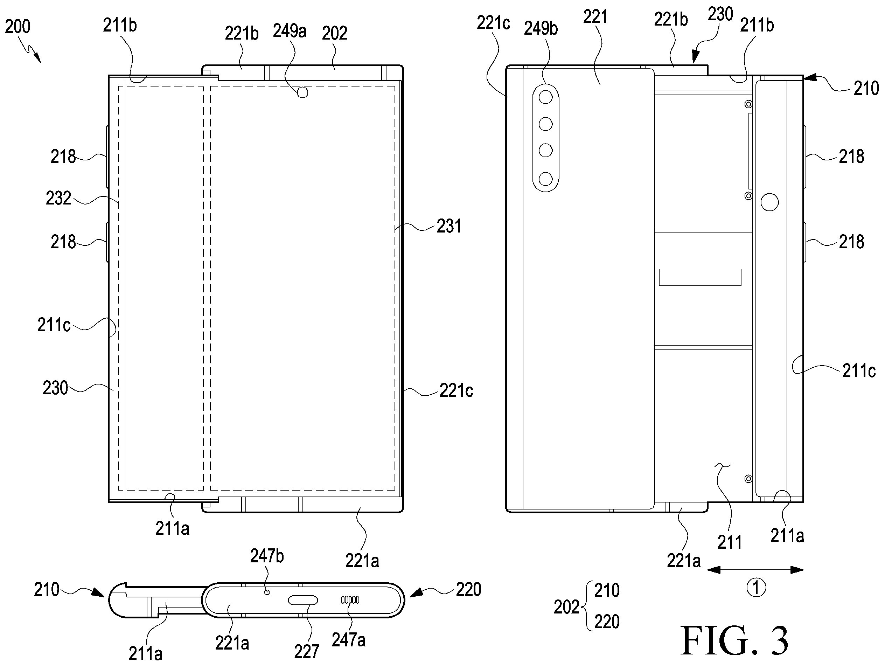

FIG. 2 is a diagram illustrating an electronic device in a closed state according to an embodiment of the disclosure. FIG. 3 is a diagram illustrating an electronic device in an opened state according to an embodiment of the disclosure. For example, FIG. 2 is a diagram illustrating a state in which a second display area 232 is accommodated in a housing 202. FIG. 3 is a diagram illustrating a state in which at least a portion of the second display area 232 is visually exposed to the outside of the housing 202.

The state illustrated in FIG. 2 may be defined as a first housing 210 being closed with respect to a second housing 220, and the state illustrated in FIG. 3 may be defined as the first housing 210 being open with respect to the second housing 220. According to an embodiment, a "closed state" or an "opened state" may be defined as a state in which an electronic device is closed or opened.

Referring to FIGS. 2 and 3, an electronic device 200 includes the housing 202. The housing 202 includes the second housing 220 and the first housing 210 movable relative to the second housing 220. In a certain embodiment, it may be interpreted as a structure in which the second housing 220 is disposed slidably on the first housing 210 in the electronic device 200. According to an embodiment, the first housing 210 may be disposed to reciprocate by a predetermined distance in a direction illustrated with respect to the second housing 220, for example, in a direction indicated by an arrow ①. The configuration of the electronic device 200 in FIGS. 2 and 3 may be wholly or partially identical to that of the electronic device 101 in FIG. 1.

According to an embodiment, the first housing 210 may be referred to as, for example, a first structure, a slide part, or a slide housing, and may be disposed to be reciprocable with respect to the second housing 220. According to an embodiment, the second housing 220 may be referred to as, for example, a second structure, a main part, or a main housing. The second housing 220 may accommodate at least a portion of the first housing 210 and guide sliding of the first housing 101. According to an embodiment, the second housing 220 may accommodate various electric and electronic components such as a main circuit board or a battery. According to an embodiment, a portion (e.g., a first display area 231) of a display 230 may be visually exposed to the outside of the housing 202. According to an embodiment, as the first housing 210 moves (e.g., slides) with respect to the second housing 220, another portion (e.g., the second display area 232) of the display 230 may be accommodated into the second housing 220 (e.g., a slide-in operation) or visually exposed to the outside of the second housing 220 (e.g., a slide-out operation).

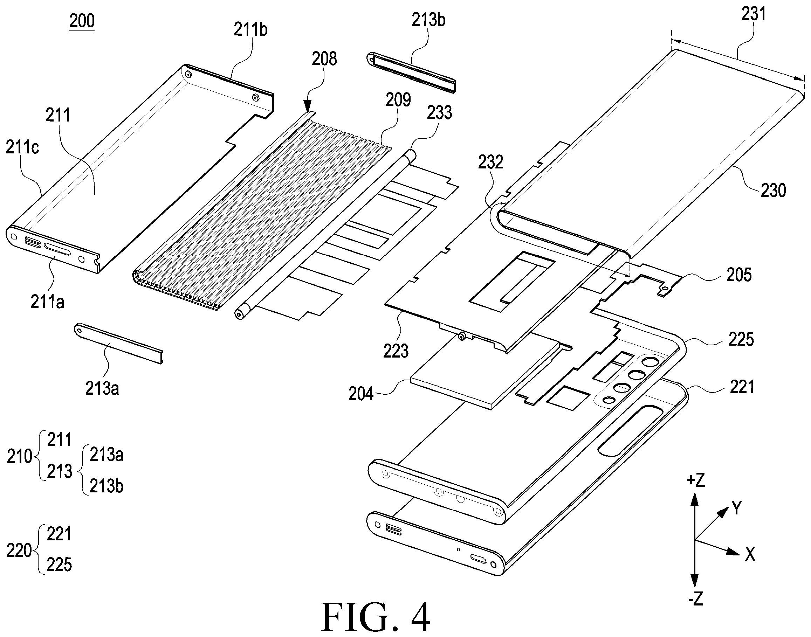

According to an embodiment, the first housing 210 may include first sidewalls 211a, 211b, and 211c to surround at least a portion of the display 230 and/or a multi-bar structure (e.g., a multi-bar structure 208 in FIG. 4). According to an embodiment, the first sidewalls 211a, 211b, and 211c may extend from a first support member 211. According to an embodiment, the first sidewalls 211a, 211b, and 211c may include a (1-1)^{th} sidewall 211a, a (1-2)^{th} sidewall 211b opposite to the (1-1)^{th} sidewall 211a, and a (1-3)^{th} sidewall 211c extending from the (1-1)^{th} sidewall 211a to the (1-2)^{th} sidewall 211b. According to an embodiment, the (1-3)^{th} sidewall 211c may be substantially perpendicular to the (1-1)^{th} sidewall 211a and/or the (1-2)^{th} sidewall 211b. According to an embodiment, when the electronic device 200 is in the closed state (e.g., FIG. 2), the (1-1)^{th} sidewall 211a may face a (2-1)^{th} sidewall 221a of the second housing 220, and the (1-2)^{th} sidewall 211b may face a (2-2)^{th} sidewall 221b of the second housing 220. According to an embodiment, the first support member 211, the (1-1)^{th} sidewall 211a, the (1-2)^{th} sidewall 211b, and/or the (1-3)^{th} sidewall 211c may be integrally formed. According to another embodiment, the first support member 211, the (1-1)^{th} sidewall 211a, the (1-2)^{th} sidewall 211b, and/or the (1-3)^{th} sidewall 211c may be formed as separate housings and combined or assembled.

According to an embodiment, the second housing 220 may include second sidewalls 221a, 221b, and 221c to surround at least a portion of the first housing 210. According to an embodiment, the second sidewalls 221a, 221b, and 221c may extend from a rear plate 221. According to an embodiment, the second sidewalls 221a, 221b, and 221c may include the (2-1)^{th} sidewall 221a, the (2-2)^{th} sidewall 221b opposite to the (2-1)^{th} sidewall 221a, and a (2-3)^{th} sidewall 221c extending from the (2-1)^{th} sidewall 221a to the (2-2)^{th} sidewall 221b. According to an embodiment, the (2-3)^{th} sidewall 221c may be substantially perpendicular to the (2-1)^{th} sidewall 221a and/or the (2-2)^{th} sidewall 221b. According to an embodiment, the (2-1)^{th} sidewall 221a may face the (1-1)^{th} sidewall 211a, and the (2-2)^{th} sidewall 221b may face the (1-2)^{th} sidewall 211b. For example, when the electronic device 200 is in the closed state (e.g., FIG. 2), the (2-1)^{th} sidewall 221a may cover at least a portion of the (1-1)^{th} sidewall 211a, and the (2-2)^{th} sidewall 221b may cover at least a portion of the (1-2)^{th} sidewall 211b.

According to an embodiment, each of the (2-1)^{th} sidewall 221a, the (2-2)^{th} sidewall 221b, and the (2-3)^{th} sidewall 221c may be formed with one surface (e.g., a front surface) open to accommodate (or surround) at least a portion of the first housing 210. For example, the first housing 210 may be connected to the second housing 220, at least partially surrounded by the second housing, and may slide in the direction of the arrow ① while being guided by the second housing 220. According to an embodiment, the rear plate 221, the (2-1)^{th} sidewall 221a, the (2-2)^{th} sidewall 221b, and/or the (2-3)^{th} sidewall 221c may be integrally formed. According to another embodiment, the rear plate 221, the (2-1)^{th} sidewall 221a, the (2-2)^{th} sidewall 221b, and/or the (2-3)^{th} sidewall 221c may be formed into separate housings and combined or assembled.

According to an embodiment, the rear plate 221 and/or the (2-3)^{th} sidewall 221c may cover at least a portion of the display 230. For example, at least a portion of the display 230 may be accommodated into the second housing 220, and the rear plate 221 and/or the (2-3)^{th} sidewall 221c may cover a portion of the display 230 accommodated in the second housing 220.

According to an embodiment, the electronic device 200 may include the display 230. For example, the display 230 may be interpreted as a flexible display or a rollable display. According to an embodiment, at least a portion (e.g., the second display area 232) of the display 230 may be slidable based on the sliding of the first housing 210. According to an embodiment, the display 230 may include or be disposed adjacent to a touch detection circuit, a pressure sensor capable of measuring the intensity (pressure) of a touch, and/or a digitizer capable of detecting a magnetic stylus pen. The configuration of the display 230 in FIGS. 2 and 3 may be wholly or partially identical to that of the display module 160 in FIG. 1.

According to an embodiment, the display 230 may include the first display area 231 and the second display area 232. According to an embodiment, at least a portion of the first display area 231 may be disposed on the second housing 220. For example, the first display area 231 may be an area always visible to the outside. According to an embodiment, the first display area 231 may be interpreted as an area that may not be located within the housing 202. According to an embodiment, the second display area 232 may extend from the first display area 231, and may be inserted or accommodated into the second housing 220 or visually exposed to the outside of the second housing 220, according to the sliding of the first housing 210.

According to an embodiment, the second display area 232 may be accommodated into the second housing or a space formed between the first housing 210 and the second housing or visually exposed to the outside, by moving while being guided by the multi-bar structure (e.g., the multi-bar structure 208 in FIG. 4) mounted substantially within the first housing 210. According to an embodiment, the second display area 232 may move based on sliding of the first housing 210 in a width direction (e.g., the direction indicated by the arrow ①) of the first housing 210. For example, at least a portion of the second display area 232 may be unfolded or rolled together with the multi-bar structure 208 based on the sliding of the first housing 210.

According to an embodiment, when the first housing 210 moves from the closed state to the opened state, the second display area 232 may gradually be exposed to the outside of the housing 202 and form a substantially planar surface with the first display area 231, as viewed from above the first housing 210. In an embodiment, the second display area 232 may be at least partially accommodated into the first housing 210 and/or the second housing 220.

According to an embodiment, the electronic device 200 may include at least one key input device 218, a connector hole 227, audio modules 247a and 247b, or camera modules 249a and 249b. While not shown, the electronic device 200 may further include an indicator (e.g., an LED device) or various sensor modules. The configurations of the audio modules 247a and 247b, and the camera modules 249a and 249b in FIGS. 2 and 3 may be wholly or partially identical to those of the audio module 170 and the camera module 180 in FIG. 1.

According to an embodiment, key input devices 218 may be located in an area of the first housing 210. Depending on appearance and usage, the electronic device 200 may be designed to be without the illustrated key input devices 218, or to include additional key input device(s). According to an embodiment, the electronic device 200 may include a key input device not shown, such as a home key button or a touch pad disposed around the home key button. According to another embodiment (not shown), at least some of the key input devices 218 may be disposed on the second housing 220.

The connector hole 227, which may be omitted according to a certain embodiment, may accommodate a connector (e.g., a USB connector) for transmitting and receiving power and/or data to and from an external electronic device. While not shown, the electronic device 200 may include a plurality of connector holes 227, and some of the plurality of connector holes 227 may function as a connector hole for transmitting and receiving audio signals to and from an external electronic device. In the illustrated embodiment, the connector hole 227 is disposed on the (2-a)^{th} sidewall 221a, to which the disclosure is not limited, and the connector hole 227 or connector holes not shown may be disposed on the (2-1)^{th} sidewall 221a or the (2-2)^{th} sidewall 221b.

According to an embodiment, the audio modules 247a and 247b may include at least one speaker hole 247a or at least one microphone hole 247b. One of speaker holes 247a may be provided as an external speaker hole, and another (not shown) may be provided as a receiver hole for voice calls. The electronic device 200 may include a microphone for obtaining a sound, and the microphone may obtain a sound external to the electronic device 200 through the microphone hole 247b. According to an embodiment, the electronic device 200 may include a plurality of microphones to detect the direction of a sound. According to an embodiment, the electronic device 200 may include an audio module in which the speaker hole 247a and the microphone hole 247b are implemented as a single hole, or may include a speaker (e.g., a piezo speaker) without the speaker hole 247a.

According to an embodiment, the camera modules 249a and 249b may include a first camera module 249a and/or a second camera module 249b. The second camera module 249b may be located in the second housing 220 and capture a subject in a direction opposite to the first display area 231 of the display 230. The electronic device 200 may include a plurality of camera modules 249a and 249b. For example, the electronic device 200 may include at least one of a wide-angle camera, a telephoto camera, or a close-up camera, and may include an IR projector and/or an IR receiver to measure a distance to a subject according to an embodiment. The camera modules 249a and 249b may include one or more lenses, an image sensor, and/or an ISP. The electronic device 200 may further include another camera module (e.g., the first camera module 249a such as a front camera) that captures a subject from the opposite direction of the second camera module 249b. For example, the first camera module 249a may be disposed around the first display area 231 or in an area overlapping with the first display area 231. When disposed in an area overlapping with the display 230, the first camera module 249a may capture a subject through the display 230.

According to an embodiment, the indicator (not shown) of the electronic device 200 may be disposed in the first housing 210 and/or the second housing 220, and include an LED to provide state information about the electronic device 200 as a visual signal. A sensor module (e.g., the sensor module 176 in FIG. 1) of the electronic device 200 may generate an electrical signal or data value corresponding to an internal operational state of the electronic device 200 or an external environmental state. The sensor module may include, for example, a proximity sensor, a fingerprint sensor, or a biometric sensor (e.g., an iris/facial recognition sensor or an HRM sensor). In another embodiment, the electronic device 200 may further include at least one of a gesture sensor, a gyro sensor, a barometric pressure sensor, a magnetic sensor, an acceleration sensor, a grip sensor, a color sensor, an IR sensor, a temperature sensor, a humidity sensor, or an illuminance sensor.

FIG. 4 is an exploded perspective view illustrating an electronic device according to one of embodiments of the disclosure.

Referring to FIG. 4, the electronic device 200 may include the first housing 210, the second housing 220, the display 230, and the multi-bar structure 208. A portion (e.g., the second display area 232) of the display 230 may be accommodated into the electronic device 200, while being guided by the multi-bar structure 208. The configurations of the first housing 210, the second housing 220, and the display 230 in FIG. 4 may be wholly or partially identical to those of the first housing 210, the second housing 220, and the display 230 in FIG. 2 and/or FIG. 3.

According to an embodiment, the first housing 210 may include the first support member 211 (e.g., a slide plate). According to an embodiment, the first support member 211 may be slidably connected to the second housing 220. According to an embodiment, the first support member 211 may include a metallic material and/or a non-metallic (e.g., polymer) material.

According to an embodiment, the first housing 210 may include at least one guide rail 213. According to an embodiment, the guide rail 213 may guide movement of the multi-bar structure 208. For example, the guide rail 213 may include a groove or recess to accommodate at least a portion of the multi-bar structure 208 therein, and the guide rail 213 may slide with respect to the second housing 220, with at least a portion thereof accommodated in the guide rail 213. According to an embodiment, the guide rail 213 may be disposed on the first support member 211 and/or the first sidewalls 211a and 211b. For example, the guide rail 213 may include a first guide rail 213a disposed on the (1-1)^{th} sidewall 211a and a second guide rail 213b disposed on the (1-2)^{th} sidewall 211b. According to an embodiment, at least a portion of the first guide rail 213a may be located between the (1-1)^{th} sidewall 211a and the multi-bar structure 208, and at least a portion of the second guide rail 213b may be located between the (1-2)^{th} sidewall 211b and the multi-bar structure 208.

According to an embodiment, as the first housing 210 slides, the multi-bar structure 208 may move with respect to the second housing 220. In the closed state (e.g., FIG. 2), the multi-bar structure 208 may be substantially accommodated within the second housing 220. According to an embodiment, the multi-bar structure 208 may be interpreted as a multi-joint hinge structure.

According to an embodiment, the multi-bar structure 208 may include a plurality of bars or rods 209. The plurality of rods 209 may extend in a straight line and be arranged along a direction in which the first housing 210 slides.

According to an embodiment, each rod 209 may revolve around an adjacent other rod 209 while remaining parallel to the adjacent other rod 209. According to an embodiment, as the first housing 210 slides, the plurality of rods 209 may be arranged to form a curved shape or a planar shape. For example, as the first housing 210 slides, a portion of the multi-bar structure 208, which faces the (1-3)^{th} sidewall 211c, may form a curved surface, while another portion of the multi-bar structure 208, which does not face the (1-3)^{th} sidewall 211c, may form a flat surface. According to an embodiment, the second display area 232 of the display 230 may be mounted or supported on the multi-bar structure 208. With the second display area 232 visually exposed to the outside of the second housing 220, at least a portion of the multi-bar structure 208 may form a substantially flat surface, thereby supporting or maintaining the second display area 232 in a flat state. According to an embodiment, the multi-bar structure 208 may be replaced with a bendable integrated support member (not shown). According to an embodiment, the multi-bar structure 208 may be interpreted as a multi-joint hinge structure.

According to an embodiment, the second housing 220 may include the rear plate 221, a display support plate 223, and/or a second support member 225. According to an embodiment, the rear plate 221 may form at least a portion of the exterior of the second housing 220 or the electronic device 200. For example, the rear plate 221 may provide a decorative effect to the exterior of the electronic device 200. According to an embodiment, the display support plate 223 may support at least a portion of the display 230. According to an embodiment, the first display area 231 may be disposed on the display support plate 223. According to an embodiment, the display support plate 223 may be interpreted as a second display support member. According to an embodiment, the second support member 225 may support a component (e.g., a battery 204 and/or a PCB 205) of the electronic device 200. For example, the battery 204 and the PCB 205 may be disposed between the display support plate 223 and the second support member 225. According to an embodiment, with the electronic device 200 in the closed state, at least a portion of the first housing 210 may be disposed between the display support plate 223 and the second support member 225. According to an embodiment, the second housing 220 (e.g., the rear plate 221, the display support plate 223, and/or the second support member 225) may be formed of at least one of a metal, glass, a synthetic resin, or ceramic. According to an embodiment, the rear plate 221 and the second support member 225 may be integrally formed. According to an embodiment, the PCB 205 may accommodate at least one (e.g., the processor 120 in FIG. 1) of the components of the electronic device 200. According to an embodiment, the battery 204 may supply power to at least one (e.g., the processor 120 in FIG. 1) of the components of the electronic device 200.

According to an embodiment, the electronic device 200 may include a display support member 233. According to an embodiment, the display support member 233 may be disposed within the first housing 210. For example, the display support member 233 may be slidable together with the first housing 210 with respect to the second housing 220. According to an embodiment, the display support member 233 may support at least a portion (e.g., the second display area 232) of the display 230 and/or at least a portion of the multi-bar structure 208. For example, at least a portion of the display 230 and/or at least a portion of the multi-bar structure 208 may be disposed between the first support member 211 of the first housing 210 and the display support member 233. According to an embodiment, the display support member 233 may be connected to the first housing 210. For example, the display support member 233 may be disposed on the first support member 211, and at least a portion thereof may be disposed substantially parallel to the (1-3)^{th} sidewall 211c. According to an embodiment, the display support member 233 may be interpreted as a portion of the first housing 210. According to an embodiment, the display support member 233 may be interpreted as a display support bar (DSB).

While the electronic device 200 disclosed in FIGS. 2 to 4 has a rollable or slidable appearance, the disclosure is not limited thereto. According to an embodiment (not shown), at least a portion of the illustrated electronic device may be rolled into a scroll shape.

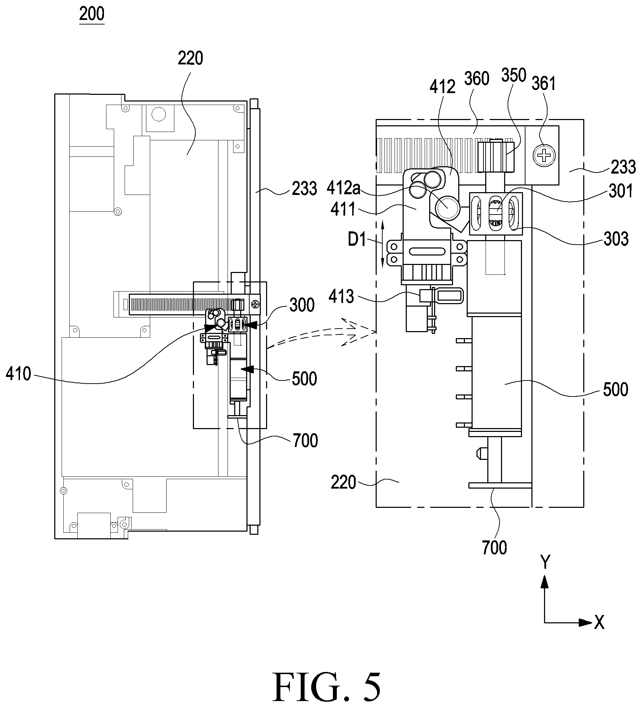

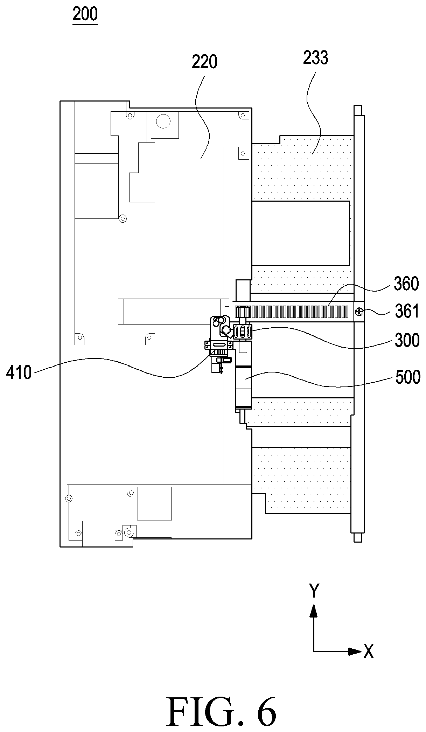

FIG. 5 is a projection view illustrating the interior of an electronic device in a closed state according to an embodiment of the disclosure. FIG. 6 is a projection view illustrating the interior of an electronic device in an opened state according to an embodiment of the disclosure. Referring to FIG. 5 and/or FIG. 6, the electronic device 200 may include the second housing 220, the display support member 233, a power transmission unit 300, a switching unit 410, and a motor unit 500. The configurations of the housing 220 and the display support member 233 in FIGS. 5 and 6 may be wholly or partially identical to those of the second housing 220 and the display support member 233 in FIG. 4.

According to an embodiment, the electronic device 200 may be opened or closed using the power transmission unit 300 and/or the motor unit 500. For example, the distance between the first housing (e.g., the first housing 210 in FIG. 2) and the second housing 220 may change based on a driving force generated by the motor unit 500. According to an embodiment, the display support member 233 may move with respect to the second housing 220 based on movement of the power transmission unit 300. The display support member 233 may be connected to the first housing 210. The first housing 210 may be movable together with at least a portion of the display support member 233, with respect to the second housing 220.

According to an embodiment, the power transmission unit 300 may mechanically connect the first housing (e.g., the first housing 210 in FIG. 2) (or the display support member 233) to the second housing 220. For example, the power transmission unit 300 may transmit at least a portion of the driving force generated by the motor unit 500 from the second housing 220 to the first housing 210.

According to an embodiment, the power transmission unit 300 may include a gear assembly 301 with at least one gear and a gear housing 303 surrounding at least a portion of the gear assembly 301. According to an embodiment, the gear assembly 301 may include a pinion gear 350 configured to rotate by the driving force generated by the motor unit 500 and a rack gear 360 configured to be meshed with the pinion gear 350. According to an embodiment, the pinion gear 350 may be connected to the second housing 220, and the rack gear 360 may be connected to the display support member 233. According to an embodiment, when the motor unit 500 generates a driving force, the pinion gear 360 connected to the motor unit 500 may rotate while being connected to the second housing 220, and the rack gear 360 may slide based on the rotation of the pinion gear 350. For example, the rack gear 360 may slide together with the display support member 233 with respect to the second housing 220. According to an embodiment, the rack gear 360 may be connected to the display support member 233 using at least one fastening member (e.g., screw) 361.

According to an embodiment, the switching unit 410 may control movement of the power transmission unit 300. According to an embodiment, the switching unit 410 may include a motor (e.g., a first motor 413) and move based on a driving force (e.g., a second driving force) generated by the motor. For example, the switching unit 410 may reduce or prevent rotation of the gear housing 303 by contacting the gear housing 303. In another example, the switching unit 410 may maintain the gear housing 303 rotatable by being spaced apart from the gear housing 303.

According to an embodiment, the switching unit 410 may include a first part 411 configured to be slidable in a first direction D1 using the second driving force generated by the first motor 413. According to an embodiment, the first direction D1 may be substantially perpendicular to the sliding direction of the electronic device 200. For example, the first direction D1 may be substantially parallel to a longitudinal direction (e.g., Y-axis direction) of the electronic device 200. According to an embodiment, the first part 411 may be connected to the first motor 413.

According to an embodiment, the switching unit 410 may include a second part 412 that may contact at least a portion of the gear housing 303. According to an embodiment, the second part 412 may be rotatably connected to the second housing based on sliding of the first part 411. For example, the second part 412 may rotate around a rotation axis structure 412a.

According to an embodiment, the switching unit 410 may include the first motor 413 configured to generate the second driving force to move the first part 411. According to an embodiment, the first motor 413 may be a linear motor. According to an embodiment, the first motor 413 may be connected to the second housing 220. According to an embodiment, the size of the first motor 413 may be smaller than the size of the motor unit 500.

According to an embodiment, the motor unit 500 may generate a driving force for a sliding operation of the electronic device 200. For example, the motor unit 500 may include a stator and a rotor. According to an embodiment, the motor unit 500 may be connected to the second housing 220. At least a portion of the driving force generated by the motor unit 500 may be transmitted to the display support member 233 using the power transmission unit 300.

According to an embodiment, the electronic device 200 may include a heat dissipation structure 700 to reduce a temperature inside the electronic device 200. According to an embodiment, the heat dissipation structure 700 may include at least one fan. According to an embodiment, the heat dissipation structure 700 may be connected to the motor unit 500. For example, the fan of the heat dissipation structure 700 may rotate based on the driving force generated by the motor unit 500. According to an embodiment, when there is a user input to operate the fan or when the processor (e.g., the processor 120 in FIG. 1) determines that it is necessary to lower the internal temperature of the electronic device 200, the processor 120 may adjust movement of the switching unit 410. The processor 120 may keep the gear housing 303 rotatable by separating the switching unit 410 from the gear housing 303. At this time, the fan of the heat dissipation structure 700 may rotate based on the driving force generated by the motor unit 500 without movement of the first housing 210 or the second housing 220.

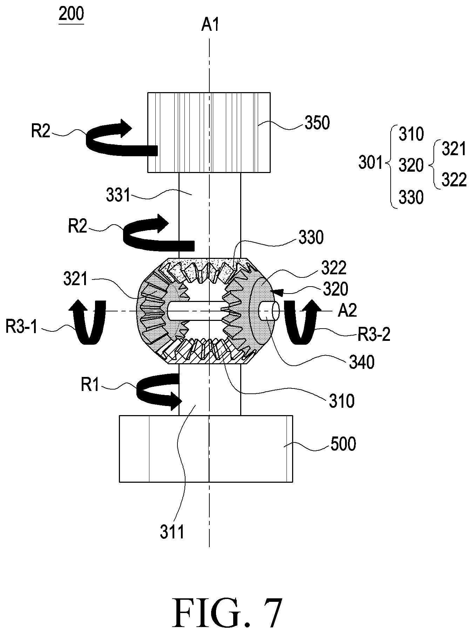

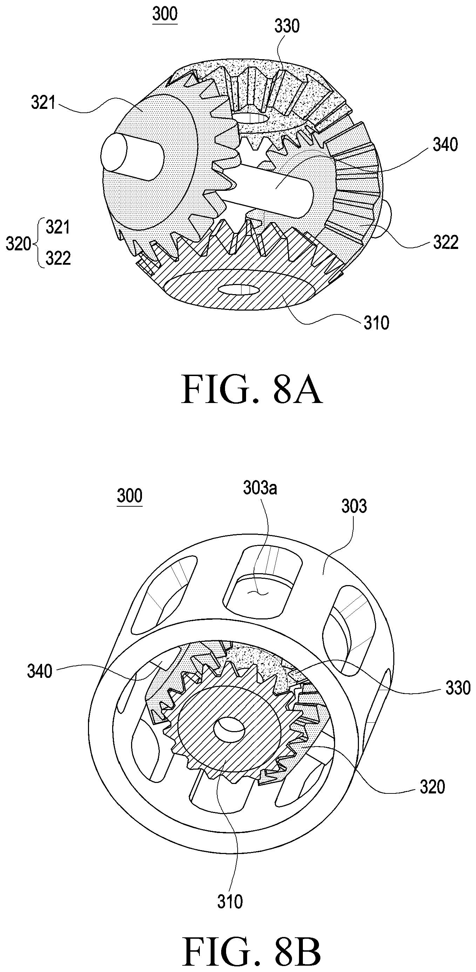

FIG. 7 is a diagram illustrating a connection relationship between a motor unit and a power transmission unit according to an embodiment of the disclosure. FIGS. 8A and 8B are perspective views illustrating a power transmission unit according to an embodiment of the disclosure. For example, FIG. 8A is a perspective view illustrating the power transmission unit 300 including the gear assembly 301, and FIG. 8B is a perspective view illustrating the power transmission unit 300 including the gear assembly 301 and the gear housing 303.

Referring to FIG. 7, FIG. 8A, and/or FIG. 8B, the power transmission unit 300 may include at least one gear (e.g., a first gear 310, a second gear 320, and a third gear 330) and a gear shaft 340. The configuration of the power transmission unit 300 in FIG. 7, FIG. 8A, and/or FIG. 8 may be wholly or partially identical to that of the power transmission unit 300 in FIG. 5.

According to an embodiment, the power transmission unit 300 may include the first gear 310, at least one second gear 320, the third gear 330, the gear shaft 340, and the pinion gear 350 (e.g., the pinion gear 350 in FIG. 5). According to an embodiment, the first gear 310, the at least one second gear 320, and/or the third gear 330 may be a bevel gear.

According to an embodiment, the first gear 310 may be connected to the motor unit 500. For example, the first gear 310 may rotate around a first rotation axis A1 based on the driving force generated by the motor unit 500.

According to an embodiment, the power transmission unit 300 may include a first shaft 311 rotatable around the first rotation axis A1. The first shaft 311 may be connected to the motor unit 500 and/or the first gear 310. For example, power generated by the motor unit 500 may be transmitted to the first gear 310 through the first shaft 311.

According to an embodiment, the at least one second gear 320 may be meshed with the first gear 310 and/or the third gear 330. For example, the second gear 320 may rotate based on the rotation of the first gear 310 and/or the third gear 330. According to an embodiment, the at least one second gear 320 may include a (2-1)^{th} gear 321 and a (2-2)^{th} gear 322 arranged substantially parallel to the (2-1)^{th} gear 321. According to an embodiment, the second gear 320 (e.g., the (2-1)^{th} gear 321 and the (2-1)^{th} gear 322) may be connected to the gear housing 303 using the gear shaft 340. According to an embodiment, the second gear 320 may be rotatably connected to the gear shaft 340. For example, the second gear 320 may include a through hole (not shown), and the gear shaft 340 may pass through the through hole (not shown). According to an embodiment, the gear shaft 340 may provide a second rotation axis A2 for rotation of the second gear 320.

According to an embodiment, in a first state in which the switching unit 410 is in contact with the gear housing 303, the second gear 320 may rotate around the second rotation axis A2 in a third rotation direction R3-1 and R3-2 substantially perpendicular to a first rotation direction R1 in which the first gear 310 rotates or a second rotation direction R2 in which the third gear 330 rotates. According to an embodiment, in a second state in which the switching unit 410 is spaced apart from the gear housing 303, the gear housing 303, the second gear 320, and the gear shaft 340 may rotate around the first rotation axis A1 along the first direction R1 in which the first gear 310 rotates. According to an embodiment, the gear shaft 340 may be connected to the second gear 320 and the gear housing 303. According to an embodiment, a (3-1)^{th} rotation direction R-1 of the (2-1)^{th} gear 321 may be opposite to a (3-2)^{th} rotation direction R-2 of the (2-2)^{th} gear 322.

According to an embodiment, the gear housing 303 may include at least one recess 303a. The recess 303a may be a through hole and/or a groove.

According to an embodiment, the third gear 330 may be meshed with the at least one second gear 320. For example, the third gear 330 may rotate based on the rotation of the second gear 320 or rotate the second gear 320. According to an embodiment, the third gear 330 may rotate around the first rotation axis A1. According to an embodiment, in the first state in which the switching unit 410 is connected to the gear housing 303, the rotation direction (e.g., the first rotation direction R1) of the first gear 310 and the rotation direction (e.g., the second rotation direction R2) of the third gear 330 may be different. For example, when the first rotation direction R1 is counterclockwise, the second rotation direction R2 may be clockwise.

According to an embodiment, the power transmission unit 300 may include a second shaft 331 rotatable around the first rotation axis A1. The second shaft 331 may be connected to the third gear 330 and/or the pinion gear 350. For example, at least a portion of power received by the third gear 330 may be transmitted to the pinion gear 350 through the second shaft 331.

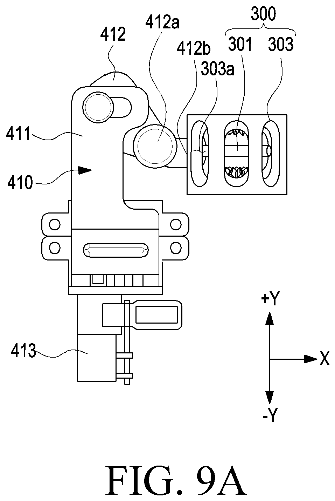

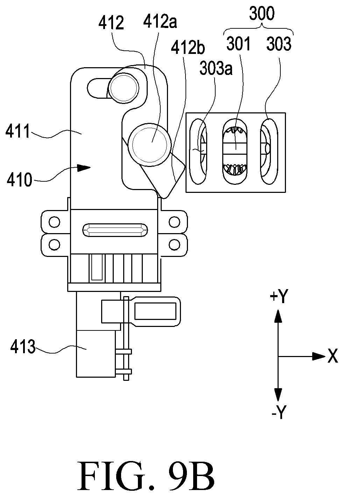

FIG. 9A is a diagram illustrating a connection state between a switching unit and a power transmission unit in an automatic state according to an embodiment of the disclosure. FIG. 9B is a diagram illustrating a connection state between the switching unit and the power transmission unit in a manual state according to an embodiment of the disclosure.

Referring to FIGS. 9A and 9B, the electronic device 200 may include the power transmission unit 300 and the switching unit 410 to control rotation of the power transmission unit 300. The configurations of the power transmission unit 300 and the switching unit 410 in FIGS. 9A and 9B may be wholly or partially identical to those of the power transmission unit 300 and the switching unit 410 in FIG. 5.

According to an embodiment, the switching unit 410 may control movement of the power transmission unit 300. For example, the switching unit 410 may reduce or prevent rotation of the gear housing 303 by being connected to the gear housing 303 in the first state (e.g., FIG. 9A). The switching unit 410 may keep the gear housing 303 rotatable by being spaced apart from the gear housing 303 in the second state (e.g., FIG. 9B). The first state may be interpreted as an automatic state in which the electronic device 200 is automatically opened. The second state may be interpreted as a manual state in which the electronic device 200 is manually opened. According to an embodiment, the processor (e.g., the processor 120 in FIG. 1) may control the connection state between the switching unit 410 and the gear housing 303. For example, the processor 120 may move the switching unit 410 to switch the state of the electronic device 200 to the first state in which the switching unit 410 is in contact with the gear housing 303 or to the second state in which the switching unit 410 is spaced apart from the gear housing 303.

According to an embodiment, in the first state (e.g., FIG. 9A), at least a portion (e.g., the second part 412) of the switching unit 410 may be inserted into the recess 303a of the gear housing 303. In the first state (e.g., FIG. 9A), the gear housing 303 and the gear shaft 340 may be fixed without rotating, even though the gear assembly 301 rotates. According to an embodiment, in the second state (e.g., FIG. 9B) in which the switching unit 410 is spaced apart from the gear housing 303, the gear housing 303 may rotate together with at least a portion of the gear assembly 301 based on rotation of the gear assembly 301. According to an embodiment, in the first state in which the first part 411 of the switching unit 410 moves in a -Y direction, the second part 412 of the switching unit 410 may fix at least a portion of the gear housing 303. For example, an end portion 412b of the second part 412 may be inserted into the recess 303a of the gear housing 303. According to an embodiment, in the second state in which the first part 411 of the switching unit 410 moves in a +Y direction, the second part 412 of the switching unit 410 may be spaced apart from the gear housing 303. According to an embodiment, the processor (e.g., the processor 120 of FIG. 1) may move the switching unit 410 in consideration of the number of recesses 303a. For example, the processor 120 may adjust the position of the switching unit 410 so that the second part 412 of the switching unit 410 is accommodated in a recess 303a. According to an embodiment, memory (e.g., memory 130 in FIG. 1) may include recess information reflecting the number of recesses 303a, the sizes of the recesses 303a, and/or the positions of the recesses 303a. The processor 120 may move the switching unit 410 based on the recess information. For example, the processor 120 may move the switching unit 410 such that the second part 412 of the switching unit 410 is inserted into a recess 303a, without contacting one surface of the gear housing 303.

According to an embodiment (not shown), the second part 412 may include a brake pad and prevent or reduce the rotation of the gear housing 303 using a frictional force. According to an embodiment (not shown), the switching unit 410 may prevent or reduce the rotation of the gear housing 303 using a hook structure (not shown). According to an embodiment (not shown), the switching unit 410 and/or the gear housing 303 may include at least one magnetic material to prevent or reduce the rotation of the gear housing 303.

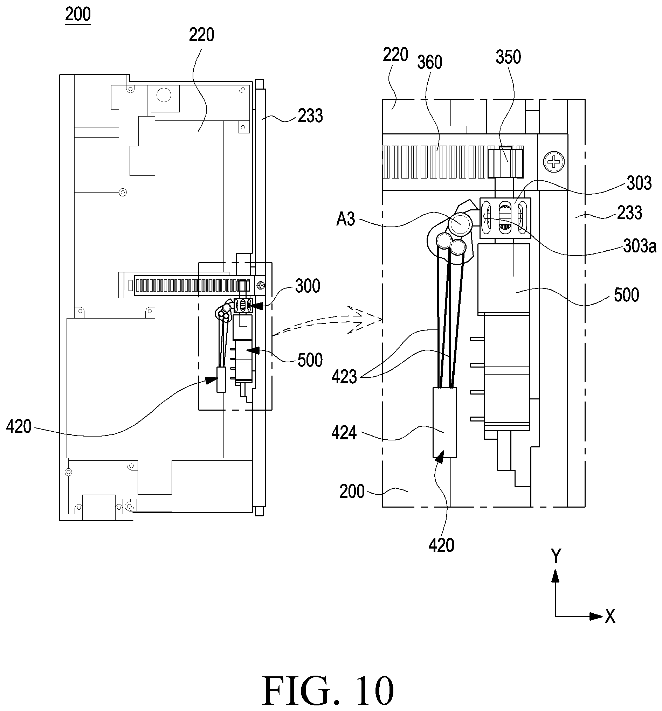

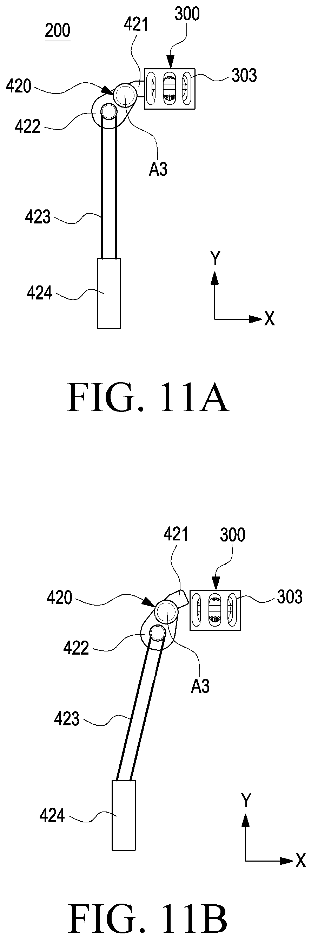

FIG. 10 is a diagram illustrating the interior of an electronic device including a deformable member according to an embodiment of the disclosure. FIG. 11A is a diagram illustrating a connection state between a switching unit and a power transmission unit in an automatic state according to an embodiment of the disclosure. FIG. 11B is a diagram illustrating a connection state between a switching unit and a power transmission unit in a manual state according to an embodiment of the disclosure.

Referring to FIG. 10, FIG. 11A, and/or FIG. 11B, the electronic device 200 may include the second housing 220, the display support member 233, the power transmission unit 300, a switching unit 420, and the motor unit 500. The configurations of the second housing 220, the display support member 233, the power transmission unit 300, the switching unit 420, and the motor unit 500 in FIG. 10, FIG. 11A, and/or FIG. 11B may be wholly or partially identical to those of the second housing 220, the display support member 233, the power transmission unit 300, the switching unit 410, and the motor unit 500 in FIG. 5.

According to an embodiment, the switching unit 420 may control movement of the power transmission unit 300. For example, the switching unit 420 may include at least one deformable member 423 and move based on the shape deformation of the deformable member 423. For example, the switching unit 420 may contact the gear housing 303 or be spaced apart from the gear housing 303 based on the shape deformation of the deformable member 423. When the switching unit 420 contacts the gear housing 303, the rotation of the gear housing 303 may be reduced or prevented. When the switching unit 420 is spaced apart from the gear housing 303, the gear housing 303 may rotate with respect to at least a portion (e.g., the first gear 310 and/or the third gear 330) of the gear assembly 301. According to an embodiment, the switching unit 420 may rotate around a third rotation axis A3 (e.g., the rotation axis structure 412a in FIG. 5). For example, the switching unit 420 may include a third area 421 configured to contact the gear housing 303, and a fourth area 422 located opposite to the third area 421 with respect to the third rotation axis A3. According to an embodiment, the fourth area 422 may be connected to the deformable member 423. For example, at least a portion of the switching unit 420 may rotate around the second rotation axis A2 based on a change in the length of the deformable member 423. For example, when the deformable member 423 is heated by a power supply module 424, the length of the deformable member 423 may decrease, and the fourth area 422 of the switching unit 420 may be moved toward the power supply module 424, so that the third area 421 of the switching unit 420 may be spaced apart from the gear housing 303.

According to an embodiment, the deformable member 423 may include a shape memory alloy (SMA). According to an embodiment, the shape of the deformable member 423 may be changed to a specified shape based on a temperature. For example, the deformable member 423 may include nickel (Ni) and/or titanium (Ti), and may be changed to a shape of austenite, twinned martensite, or modified martensite based on a temperature and/or a force applied to the deformable member 423. According to another embodiment, the deformable member 423 may include copper (Cu), zinc (Zn), and/or aluminum (Al).

According to an embodiment, the switching unit 420 may include the power supply module 424. According to an embodiment, the power supply module 424 may be electrically connected to the processor (e.g., the processor 120 in FIG. 1), and the processor 120 may provide current to the deformable member 423 based on information obtained using a sensor module (e.g., the sensor module 176 in FIG. 1). According to an embodiment, the temperature of the deformable member 423 may be increased by the current transmitted from the power supply module 424. According to an embodiment, the shape or length of the deformable member 423 in a first state in which the deformable member 423 is heated (e.g., FIG. 11B) may be different from the shape or length of the deformable member 423 in a second state in which the deformable member 423 is not heated (e.g., FIG. 11A).

According to an embodiment, the switching unit 420 may include at least one elastic member (e.g., spring) (not shown). According to an embodiment, when the power supply module 424 does not provide current, the at least one elastic member may reduce or prevent movement of the switching unit 420. For example, in the first state (e.g., FIG. 11A) in which the deformable member 423 is not heated, the movement of the switching unit 420 may be reduced by the at least one elastic member. In the second state (e.g., FIG. 11B) in which the deformable member 423 is heated, a force caused by the length change of the deformable member 423 may be greater than an elastic force provided to the switching unit 420 by the at least one elastic member.

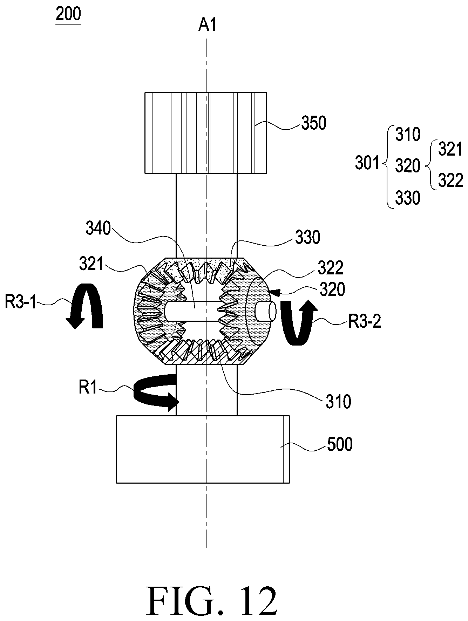

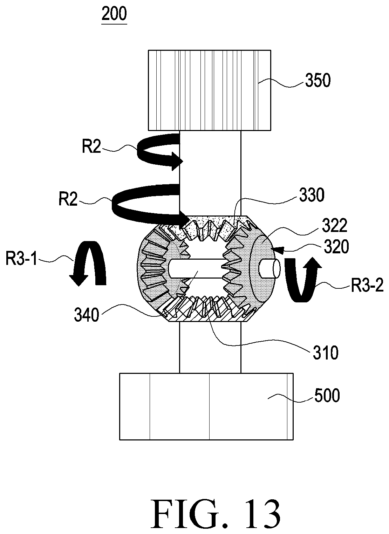

FIGS. 12 and 13 are diagrams illustrating an operation of a power transmission unit in a second state according to an embodiment of the disclosure. For example, FIG. 12 is a diagram illustrating an operation of the power transmission unit 300 in the second state, when the motor unit 500 of the electronic device is driven. FIG. 13 is a diagram illustrating an operation of the power transmission unit 300, when a force is applied to the electronic device from the outside of the electronic device. The second state may be interpreted as a state in which the gear housing (e.g., the gear housing 303 in FIG. 9B) and the switching unit (e.g., the switching unit 410 in FIG. 9B) are spaced apart from each other.

Referring to FIGS. 12 and 13, the electronic device 200 may include the power transmission unit 300 including the gear assembly 301, and the motor unit 500. The gear assembly 301 may include the first gear 310, the at least one second gear 320, the third gear 330, the gear shaft 340, and the pinion gear 350. The configurations of the power transmission unit 300 and the motor unit 500 in FIGS. 12 and 13 may be wholly or partially identical to those of the power transmission unit 300 and the motor unit 500 in FIGS. 5 to 7.

According to an embodiment, in the second state, the third gear 330 and/or the pinion gear 350 may operate independently of the motor unit 500. According to an embodiment, in the second state, when the first gear 310 rotates based on a driving force generated by the motor unit 500, the at least one second gear 320 and the gear shaft 340 may rotate based on the rotation of the first gear 310, and the third gear 330 and/or the pinion gear 350 may not rotate. For example, in the second state, when the motor unit 500 rotates, the first housing (e.g., the first housing 210 in FIG. 2) may not slide with respect to the second housing (e.g., the second housing 220 in FIG. 2).

According to an embodiment (e.g., FIG. 12), when the first gear 310 rotates around the first rotation axis A1 in the first rotation direction R1, the at least one second gear 320 and the gear shaft 340 may rotate around the first rotation axis A1, and the third gear 330 and the pinion gear 350 may not move. For example, the magnitude (e.g., 3kgf) of a force required to rotate the pinion gear 350 (e.g., a frictional force between the pinion gear 350 and the rack gear (e.g., the rack gear 360 in FIG. 5) and/or a repulsive force of the display (e.g., the display 230 in FIG. 3)) may be greater than the magnitude of a force required for the second gear 320 to rotate with respect to the first gear 310 or the third gear 330 (e.g., a frictional force between the second gear 320 and the first gear 310 and/or a frictional force between the second gear 320 and the third gear 330). As the at least one second gear 320, the gear shaft 340, and the gear housing (e.g., the gear housing 303 in FIG. 5) rotate with respect to the first gear 310 before the third gear 330, the third gear 330 may not rotate with respect to the first gear 310.

According to an embodiment (e.g., FIG. 13), the third gear 330 and/or the pinion gear 350 may rotate by an external force applied from the outside of the electronic device 200. For example, when the first housing (e.g., the housing 210 in FIG. 1) slides, the rack gear 360 may move together with the first housing 210, and the pinion gear 350 and/or the third gear 330 may rotate around the first rotation axis A1 in a second direction R2 based on the sliding of the rack gear 360. According to an embodiment, when the third gear 330 rotates, the at least one second gear 320 and the gear shaft 340 may rotate around the first rotation axis A1, and the first gear 310 may not move. For example, the magnitude (e.g., about 0.6 to 1kgf) of a force required for the rotation of the first gear 310 (e.g., a driving force required for rotation of a motor core (not shown) located in the motor unit 500 connected to the first gear 310) may be greater than the magnitude of a force required for the rotation of the second gear 320 with respect to the first gear 310 or the third gear 330 (e.g., a frictional force between the second gear 320 and the first gear 310 and/or a frictional force between the second gear 320 and the third gear 330). As the at least one second gear 320, the gear shaft 340, and the gear housing (e.g., the gear housing 303 in FIG. 5) rotate with respect to the third gear 330 before the first gear 310, the first gear 310 may not rotate with respect to the third gear 330.

According to an embodiment, as the third gear 330 and/or the pinion gear 350 rotates independently of the first gear 310 in the second state, a force required to rotate a gear located within the motor unit 500 may be reduced. For example, a force (about 0.6 to 1.4kgf) required to rotate a reduction gear located within the motor unit 500 may be reduced. A force required to open the electronic device 200 may be reduced, and user convenience may be increased.

According to an embodiment, in the second state, as the third gear 330 and/or the pinion gear 350 rotates independently of the first gear 310 and/or the motor unit 500, breakage of the motor unit 500 caused by an external force applied to the electronic device 200 may be reduced or prevented. The second state may be interpreted as a state in which a user manually opens or closes the electronic device 200, or an external force (e.g., a repulsive force from a collision with the ground) is applied to the electronic device 200.

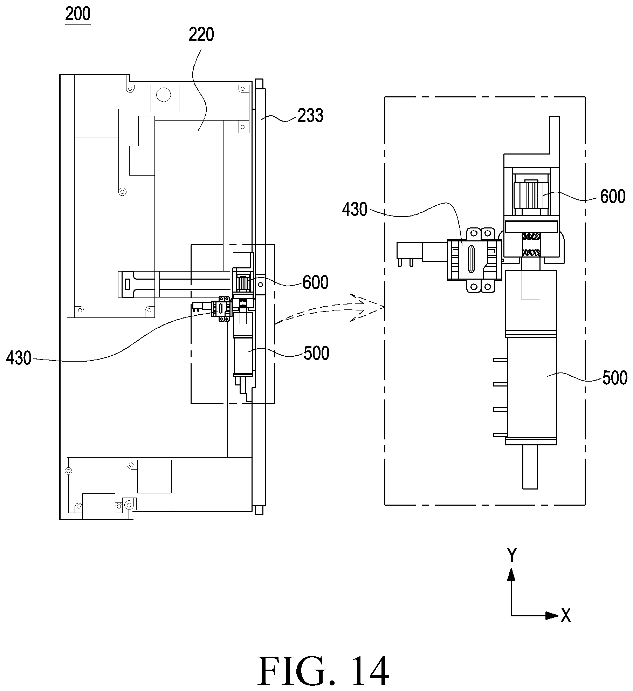

FIG. 14 is a projection view illustrating the interior of an electronic device including a switching unit with a fourth gear in a closed state according to an embodiment of the disclosure. FIG. 15A is an enlarged view illustrating an electronic device in a first state according to an embodiment of the disclosure, FIG. 15B is an enlarged view illustrating the electronic device in a second state according to an embodiment of the disclosure, FIG. 15C is a diagram illustrating a connection relationship between a first gear and a third gear according to an embodiment of the disclosure, FIG. 15D is a diagram illustrating a connection relationship between the first gear and the third gear according to another embodiment of the disclosure, and FIG. 15E is a diagram illustrating a connection relationship between the first gear and the third gear according to another embodiment of the disclosure.

Referring to FIGS. 14 to 15E, the electronic device 200 may include the second housing 220, the display support member 233, a power transmission unit 600, a switching unit 430, and the motor unit 500. The configurations of the second housing 220, the display support member 233, the power transmission unit 600, the switching unit 430, and the motor unit 500 in FIG. 14, FIG. 15A, FIG. 15B, FIG. 15C, FIG. 15D, and/or FIG. 15E may be wholly or partially identical to those of the second housing 220, the display support member 233, the power transmission unit 300, the switching unit 410, and the motor unit 500 in FIG. 5.

According to an embodiment, the power transmission unit 600 may include a first shaft 611 connected to the motor unit 500, a first gear 610, a third gear 630, and a third shaft 631 connected to a pinion gear 650. According to an embodiment, the first gear 610 and the third gear 630 may be disposed to be spaced apart from each other, substantially parallel to each other. The configurations of the first gear 610, the first shaft 611, the third gear 630, the third shaft 631, and the pinion gear 650 may be substantially the same as those of the first gear 310, the first shaft 311, the third gear 330, the second shaft 331, and the pinion gear 350 in FIG. 5 and/or FIG. 7.

According to an embodiment, the switching unit 430 may include a fourth gear 431 facing the first gear 610 and the third gear 630. According to an embodiment, the switching unit 430 may include a first motor 432 to move the switching unit 430. According to an embodiment, at least a portion (e.g., the fourth gear 431) of the switching unit 430 may slide in a width direction (e.g., an X-axis direction) of the electronic device 200 based on a driving force of the first motor 432. According to an embodiment, the first motor 432 may be a linear motor. According to an embodiment, the fourth gear 431 may be in contact with the first gear 610 and/or the third gear 630 in a first state (e.g., FIG. 15A). For example, a driving force generated by the motor unit 500 may be transmitted to the third gear 630 through the first gear 610 and the fourth gear 431. According to an embodiment, the fourth gear 431 may be spaced apart from the first gear 610 and the third gear 630 in a second state (e.g., FIG. 15B). For example, a driving force generated by the motor unit 500 may not be transmitted to the third gear 630. A force caused by sliding of the display support member 233 may not be transmitted to the motor unit 500.

According to a certain embodiment (e.g., FIG. 15C), the first gear 610 may move in the longitudinal direction (e.g., Y-axis direction) of the electronic device 200 with respect to the third gear 630. According to an embodiment, the first gear 610 may move along a first rotation axis (e.g., the first rotation axis A1 in FIG. 7) using the first shaft 611 which is connected to the motor unit 500 by a screw structure. According to an embodiment, the first shaft 611 may move along the first rotation axis (e.g., the first rotation axis A1 in FIG. 7) using at least a portion (e.g., the first motor 432 in FIG. 15A) of the switching unit (e.g., the switching unit 410 in FIG. 6). In a first state in which the first gear 610 is meshed with the third gear 630, the third gear 630, the second shaft 631, and/or the pinion gear 650 may rotate based on power transmitted from the motor unit 500. In the second state in which the first gear 610 is spaced apart from the third gear 630, the third gear 630 and/or the pinion gear 650 may rotate independently of the motor unit 500. In FIG. 15C, the first gear 610 and the third gear 630 are shown as bevel gears, to which the shapes of the first gear 610 and the third gear 630 are not limited.

According to a certain embodiment (e.g., FIG. 15D), the first gear 610 may include an outer gear 610b and an inner gear 610a. The outer gear 610b may be meshed with the third gear 630, and the inner gear 610a may be meshed with a gear formed on the outer periphery of the first shaft 611. According to an embodiment, the first shaft 611 may include a screw structure and move in the longitudinal direction (e.g., the Y-axis direction) along the first rotation axis (e.g., the first rotation axis A1 in FIG. 7), while being connected to the motor unit 500 using a screw structure. According to an embodiment, the first shaft 611 may move in the longitudinal direction (e.g., Y-axis direction) along the first rotation axis (e.g., the first rotation axis A1 in FIG. 7) using at least a portion (e.g., the first motor 432 in FIG. 15A) of the switching unit (e.g., the switching unit 410 in FIG. 6). In the first state in which the inner gear 610a of the first gear 610 is meshed with the first shaft 611, the first gear 610 may rotate together with the first shaft 611. For example, in the first state, the pinion gear 650 may receive power provided by the motor unit 500 using the first shaft 611, the first gear 610, the third gear 630, and the second shaft 631. In a second state in which the inner gear 610a of the first gear 610 is not meshed with the first shaft 611, the first gear 610 may rotate independently of the first shaft 611. For example, in the second state, the pinion gear 650 may rotate independently of the motor unit 500, without receiving power provided by the motor unit 500.

According to a certain embodiment (e.g., FIG. 15E), the power transmission unit 600 may include at least one protrusion 660 to connect the first shaft 611 to the second shaft 631. For example, the protrusion 660 may be connected to the first shaft 611, and may be connected to or disconnected from the second shaft 631 based on rotation of the motor unit 500. According to an embodiment, the first shaft 611 may include a screw structure and move along the first rotation axis (e.g., the first rotation axis A1 in FIG. 7), while being connected to the motor unit 500 using the screw structure. According to another embodiment, the protrusion 660 may include a screw structure and move along the first rotation axis (e.g., the first rotation axis A1 in FIG. 7), while being connected to the first shaft 611 using the screw structure. According to an embodiment, the first shaft 611 and/or the protrusion 660 may move along the first rotation axis (e.g., the first rotation axis A1 in FIG. 7) using at least a portion (e.g., the first motor 432 in FIG. 15A) of the switching unit (e.g., the switching unit 410 in FIG. 6). In a first state in which the protrusion 660 is connected to the second shaft 631, the pinion gear 650 and/or the second shaft 631 may rotate based on power transmitted from the motor unit 500. In a second state in which the protrusion 660 is disconnected from the second shaft 631, the pinion gear 650 may rotate independently of the motor unit 500.

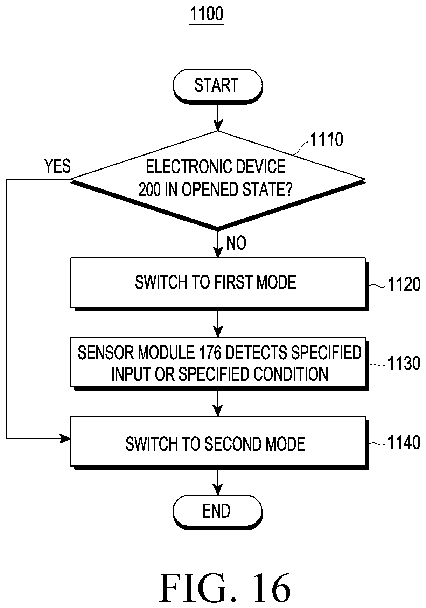

FIG. 16 is a flowchart illustrating an operation 1100 of switching an operation mode of an electronic device according to an embodiment of the disclosure.

Referring to FIG. 16, the operation 1100 of switching an operation mode (or state) of the electronic device 200 may include determining whether the electronic device is in the opened state in operation 1100, switching to a first mode in operation 1120, detecting a specified input or a specified condition by the sensor module 176 in operation 1130, and/or switching to a second mode in operation 1140. The configurations of the electronic device 200 and the sensor module 176 in FIG. 16 may be wholly or partially identical to those of the electronic device 101 and the sensor module 176 in FIG. 1.

According to an embodiment, a processor (e.g., the processor 120 in FIG. 1) may determine whether the electronic device 200 is in the opened state. For example, the sensor module 176 may include a magnetic field sensor (e.g., a Hall sensor), a capacitive sensor, and/or an optical sensor module, and the processor 120 may determine whether the electronic device 200 is in the opened state (e.g., FIG. 2) or the closed state (e.g., FIG. 3) using information detected by the sensor module 176. According to an embodiment, the processor 120 may determine a slide distance of the electronic device 200.

According to an embodiment, when the electronic device 200 is not in the opened state, the processor 120 may switch the electronic device 200 to the first mode. For example, when the electronic device 200 is in the closed state, the processor 120 may switch the electronic device 200 to the first mode. According to an embodiment, the first mode may be interpreted as a state in which a switching unit (e.g., the switching unit 410 in FIG. 5, the switching unit 420 in FIG. 10, and/or the switching unit 430 in FIG. 14) and a power transmission unit (e.g., the power transmission unit 300 in FIG. 5 or FIG. 10, and/or the power transmission unit 600 in FIG. 14) are in contact with each other. For example, the first mode may be interpreted as an automatic mode or an automatic motor mode.

According to an embodiment, when the electronic device 200 is in the opened state, the processor 120 may switch the electronic device 200 to the second mode. According to an embodiment, the second mode may be interpreted as a state in which the switching unit 410, 420, or 430 and the power transmission unit 300 or 600 are spaced apart from each other. For example, the second mode may be interpreted as a manual mode.

According to an embodiment, the sensor module 176 may perform operation 1130 to detect a specified input (e.g., a user input) or a specified condition (e.g., an internal temperature of the electronic device, drop, or a remaining battery capacity). According to an embodiment, the sensor module 176 may detect a user input provided on a key input device (e.g., the key input devices 218 in FIG. 2) and/or the display 230. According to an embodiment, the sensor module 176 may include a temperature sensor to detect an internal temperature of the electronic device 200. According to an embodiment, the sensor module 176 may include an acceleration sensor to detect an acceleration of the electronic device 200 and/or a gyro sensor to detect a direction in which the electronic device 200 is located. According to an embodiment, the sensor module 176 may include a current detection sensor to detect a remaining capacity of a battery (e.g., the battery 204 in FIG. 4). According to an embodiment, the sensor module 176 may include a pressure sensor to detect pressure applied to the electronic device 200 from the outside of the electronic device 200.

According to an embodiment, when the sensor module 176 detects the specified input or the specified condition, the processor 120 may perform operation 1140 to switch the electronic device 200 to the second mode.

According to an embodiment, when obtaining the specified input (e.g., user input) detected using the sensor module 176, the processor 120 may switch the electronic device 200 to the second mode. According to an embodiment, user convenience may be increased by allowing a user to selectively use the first mode or the second mode.

According to an embodiment, when the sensor module 176 detects the specified condition, the processor 120 may perform operation 1140 to switch the electronic device 200 to the second mode.

According to an embodiment, when the internal temperature of the electronic device 200 is equal to or higher than a specified temperature, the processor 120 may switch the electronic device 200 to the second mode. According to an embodiment, when the electronic device 200 is switched to the second mode, the temperature rise of the electronic device 200 may be reduced by heat generated by a motor unit (e.g., the motor unit 500 in FIG. 5) and/or the switching unit (e.g., switching unit 410 in FIG. 5), thereby reducing or preventing breakage of internal components of the electronic device 200.

According to an embodiment, when the remaining capacity (state of charge) of the battery (e.g., the battery 204 in FIG. 4) of the electronic device 200 is equal to or less than a specified remaining capacity, the processor 120 may switch the electronic device 200 to the second mode. According to an embodiment, when the electronic device 200 is switched to the second mode, power consumed by the motor unit (e.g., the motor unit 500 in FIG. 5) and/or the switching unit (e.g., the switching unit 410 in FIG. 5) may be reduced, and user convenience may be increased.

According to an embodiment, when detecting a drop of the electronic device 200, the processor 120 may switch the electronic device 200 to the second mode. For example, the processor 120 may determine whether the electronic device 200 is falling based on information obtained using the sensor module 176 (e.g., a gyro sensor and/or an acceleration sensor). When determining that the electronic device 200 is falling, the processor 120 may switch the electronic device 200 to the second mode. In another example, after the electronic device 200 is subjected to an external impact, the processor 120 may switch the electronic device 200 to the second mode based on information obtained using the sensor module 176 (e.g., a pressure sensor). According to an embodiment, when the electronic device 200 is switched to the second mode, a force applied to the motor unit (e.g., the motor unit 500 in FIG. 5) located within a second housing (e.g., the second housing 220 in FIG. 2) based on sliding of a first housing (e.g., the first housing 210 in FIG. 2) may be reduced, and breakage of the motor unit 500 (e.g., the motor core) may be prevented or reduced.

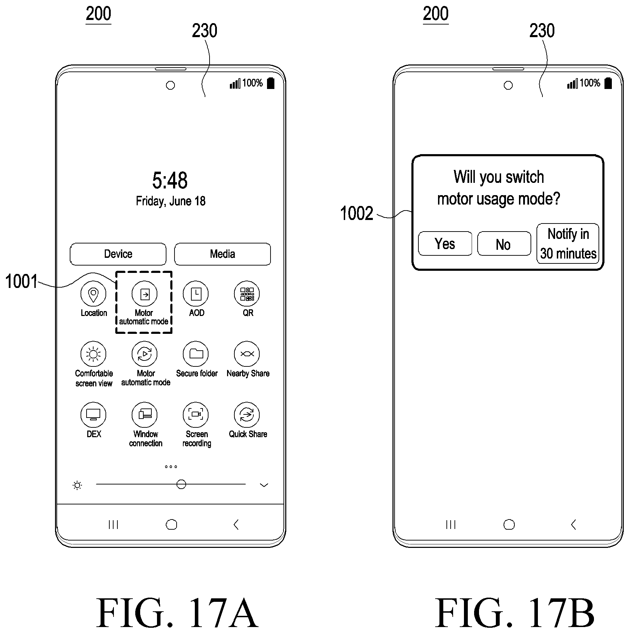

FIGS. 17A and 17B are diagrams illustrating switching of an operation state of an electronic device according to an embodiment of the disclosure.

Referring to FIGS. 17A and 17B, the electronic device 200 may include the display 230. The configurations of the electronic device 200 and the display 230 in FIG. 17A and/or FIG. 17B may be wholly or partially identical to those of the electronic device 200 and the display 230 in FIG. 2.

According to an embodiment, the display 230 may display a usage mode switching icon 1001. According to an embodiment, the usage mode switching icon 1001 may indicate a first-mode (e.g., automatic-mode) state or a second-mode (e.g., manual-mode) state. According to an embodiment, the processor (e.g., the processor 120 in FIG. 1) may move the switching unit (e.g., th switching unit 410 in FIG. 5, the switching unit 420 in FIG. 10, or the switching unit 430 in FIG. 14) based on a user input (e.g., a touch) to the usage mode switching icon 1001 provided by the user. For example, the automatic-mode state may be interpreted as a first mode in which the power transmission unit (e.g., the power transmission unit 300 in FIG. 5) is in contact with the switching unit 410, 420, or 430, and the manual-mode state may be interpreted as a second mode in which the power transmission unit (e.g., the power transmission unit 300 in FIG. 5) is spaced apart from the switching unit 410, 420, or 430.

According to an embodiment, the electronic device 200 may display a usage mode switching notification 1002 to switch the state of the switching unit 410, 420, or 430. According to an embodiment, the processor (e.g., the processor 120 in FIG. 1) may output the usage mode switching notification 1002 using the display 230 based on information detected by the sensor module (e.g., the sensor module 176 in FIG. 1). For example, when the internal temperature of the electronic device 200 is higher than a specified temperature, or when the remaining capacity of the battery (e.g., the battery 205 in FIG. 4) of the electronic device 200 is less than a specified capacity, the processor 120 may provide the usage mode switching notification 1002 to the user. According to an embodiment, the processor 120 may switch the operation mode (e.g., the first mode or the second mode) of the electronic device 200 based on a user input applied to the usage mode switching notification 1002. According to an embodiment, the usage mode switching notification 1002 may include an area for outputting the usage mode switching notification 1002 on the display 230 again after a specified time (e.g., 30 minutes).

An electronic device (e.g., a portable terminal) includes a display in the shape of a flat surface or both flat and curved surfaces. The electronic device with the display may be limited in realizing a screen larger than the size of the electronic device due to the fixed structure of the display. Accordingly, electronic devices including rollable displays have been studied.

In an electronic device including a rollable display, the electronic device may be rolled or slided manually using a user's force. However, the manual rolling or sliding may increase the user's fatigue level, thereby reducing user convenience.

The rolling or sliding of the electronic device may be performed automatically using a driving force generated by a component of the electronic device. However, when a force is applied to the automatically rollable or slidable electronic device from the outside of the electronic device, a component (e.g., a motor) of the electronic device may be damaged.

According to an embodiment of the disclosure, an electronic device capable of operating in an automatic mode or a manual mode while reducing or preventing breakage of the electronic device may be provided.

However, the problems addressed by the disclosure are not limited to the above-mentioned problems.

An electronic device according to an embodiment of the disclosure may be switched to an automatic mode or a manual mode using a switching unit for controlling whether to rotate a gear housing. As the electronic device is switched to the automatic slide mode or the manual mode, user convenience may be increased, and damage to a motor may be reduced or prevented.

The electronic device according to an embodiment of the disclosure may be switched to the manual mode under a specified condition. For example, when the electronic device is dropped or overheated, the electronic device may be switched to the manual mode. In another example, when the remaining capacity of a battery of the electronic device is less than a specified capacity, the electronic device may be switched to the manual mode. As the electronic device is switched to the manual mode under the specified condition, damage to the electronic device may be reduced or prevented, or user convenience may be increased.

According to an embodiment of the disclosure, an electronic device (e.g., the electronic device 200 in FIG. 2) may include a housing (e.g., the housing 202 in FIG. 2) including a first housing (e.g., the first housing 210 in FIG 2) and a second housing (e.g., the second housing 220 in FIG. 2) accommodating at least a portion of the first housing and configured to guide sliding of the first housing, a display (e.g., the display 230 in FIG. 2) configured to be at least partially unfolded based on sliding of the first housing, a motor unit (e.g., the motor unit 500 in FIG. 5) disposed within the housing, a power transmission unit (e.g., the power transmission unit 300 in FIG. 5) disposed within the housing, and including a gear assembly (e.g., the gear assembly 301 in FIG. 5) configured to receive at least a portion of a driving force generated by the motor unit and a gear housing (e.g., the gear housing 303 in FIG. 5) configured to rotate together with at least a portion of the gear assembly, a switching unit (e.g., the switching unit 410 in FIG. 5 or the switching unit 420 in FIG. 10) disposed within the housing and configured to control the rotation of the gear housing, a sensor module (e.g., the sensor module 176 in FIG. 1) configured to detect at least one of an internal operation state of the electronic device, an external environmental state, or a user input provided to the electronic device, and a processor (e.g., the processor 120 in FIG. 1) configured to adjust a connection state between the switching unit and the gear housing based on the state or input detected by the sensor module.

According to an embodiment, the power transmission unit may include a first gear (e.g., the first gear 310 in FIG. 8A) connected to the motor unit, at least one second gear (e.g., the second gear 320 in FIG. 8A) meshed with the first gear, a gear shaft (e.g., the gear shaft 340 in FIG. 8A) rotatably connected to the at least one second gear, and a third gear (e.g., the third gear 330 in FIG. 8A) meshed with the at least one second gear, and the gear housing may be connected to the gear shaft.

According to an embodiment, the first gear may be configured to rotate in a first rotation direction (e.g., the first rotation direction R1 in FIG. 7), and the third gear may be configured to rotate in a second rotation direction (e.g., the second rotation direction R2 in FIG. 7) opposite to the first rotation direction, in a first state in which the switching unit is connected to the gear housing.

According to an embodiment, the processor may be configured to, using the switching unit, switch the gear housing to a first state (e.g., FIG. 9A) in which the gear housing is fixed to the power transmission unit or to a second state (e.g., FIG. 9B) in which the gear housing is spaced apart from the switching unit and rotate with respect to at least a portion of the power transmission unit.

According to an embodiment, the power transmission unit may include a first gear (e.g., the first gear 310 in FIG. 7) connected to the motor unit and configured to rotate around a first rotation axis (e.g., the first rotation axis A1 in FIG. 7), at least one second gear (e.g., the second gear 320 in FIG. 2) configured to be meshed with the first gear, a gear shaft (e.g., the gear shaft 340 in FIG. 7) rotatably connected to the at least one second gear and providing a second rotation axis (e.g., the second rotation axis A2 in FIG. 7), perpendicular to the first rotation axis, and a third gear (e.g., the third gear 330 in FIG. 7) meshed with the second gear and configured to rotate around the first rotation axis. The at least one second gear may be configured to rotate around the second rotation axis, and the third gear may be configured to transmit a rotational force transmitted from the first gear through the at least one second gear, in the first state. The gear housing, the at least one second gear, and the gear shaft may be configured to rotate around the first rotation axis, and the first gear and the third gear may be configured to move independently, in the second state.

According to an embodiment, the switching unit may be configured to contact the gear housing or to be spaced apart from the gear housing.

According to an embodiment, the gear housing may include at least one recess (e.g., the recess 303a in FIG. 8B), and when the switching unit contacts the gear housing, at least a portion of the switching unit may be accommodated in the at least one recess.

According to an embodiment, the switching unit may include a first motor (e.g., the first motor 413 in FIG. 5) configured to generate a second driving force for moving at least a portion of the switching unit in a first direction (e.g., the first direction D1 in FIG. 5), a first part (e.g., the first part 411 in FIG. 5) configured to be slidable using the second driving force generated by the first motor, and a second part (e.g., the second part in FIG. 5) connected to the second housing to be rotatable based on sliding of the first part, and configured to contact the gear housing.

According to an embodiment, the switching unit may include a third area (e.g., the third area 411 in FIG. 11A) connected to the second housing to be rotatable around a third rotation axis (e.g., the third rotation axis A3 in FIG. 10) and configured to contact the gear housing, a fourth area (e.g., the fourth area 422 in FIG. 11A) located opposite to the third area with respect to the third rotation axis, and a deformable member connected to the fourth area and including a shape memory alloy. The electronic device may further include a power supply module (e.g., the power supply module 424 in FIG. 11A) configured to provide current to the deformable member, and the deformable member may be configured to rotate at least a portion of the switching unit, when receiving current from the power supply module.

According to an embodiment, the power transmission unit may include a pinion gear (e.g., the pinion gear 350 in FIG. 5) configured to rotate by a driving force generated by the motor unit, and a rack gear (e.g., the rack gear 360 in FIG. 5) configured to be meshed with the pinion gear.

According to an embodiment, the electronic device may further include a display support member (e.g., the display support member 233 in FIG. 5) supporting at least a portion of the display, the motor unit may be connected to the second housing, and the rack gear may be connected to the display support member.

According to an embodiment, the electronic device may further include a display support member (e.g., the display support member 233 in FIG. 5) supporting at least a portion of the display, the rack gear may be connected to the second housing, and the motor unit may be connected to the display support member.

According to an embodiment, the sensor module may include at least one of a gyro sensor, an acceleration sensor, a pressure sensor, or a touch sensor, and the processor may be configured to determine whether the electronic device is dropped using the sensor module, and when determining that the electronic device is in a drop state, to separate the switching unit from the gear housing.

According to an embodiment, the sensor module may include a temperature sensor detecting an internal temperature of the electronic device, and the processor may be configured to separate the switching unit from the gear housing, when the internal temperature is equal to or higher than a specified temperature.

According to an embodiment, the electronic device may further include a battery supplying power to the motor unit and the processor, and the processor may be configured to separate the switching unit from the gear housing, when a remaining capacity of the battery is less than a specified capacity.

According to an embodiment of the disclosure, an electronic device (e.g., the electronic device 200 in FIG. 2) may include a housing (e.g., the housing 202 in FIG. 2) including a first housing (e.g., the first housing 210 in FIG 2) and a second housing (e.g., the second housing 220 in FIG. 2) accommodating at least a portion of the first housing and configured to guide sliding of the first housing, a display (e.g., the display 230 in FIG. 2) configured to be at least partially unfolded based on movement of the first housing, a motor unit (e.g., the motor unit 500 in FIG. 5) disposed within the housing and configured to generate a first driving force for moving the display, a first shaft (e.g., the first shaft 311 in FIG. 7) connected to the motor unit and configured to rotate around a first rotation axis (e.g., the first rotation axis A1 in FIG. 7), a first gear (e.g., the first gear 310 in FIG. 7) connected to the first shaft, a second shaft (e.g., the second shaft 331 in FIG. 7) spaced apart from the first shaft and configured to rotate around the first rotation axis, a third gear (e.g., the third gear 330 in FIG. 7) connected to the second shaft, at least one second gear (e.g., the second gear 320 in FIG. 7) meshed with the first gear and the third gear, and a gear shaft (e.g., the gear shaft 340 in FIG. 7) connected to the at least one second gear to be rotatable around a second rotation axis perpendicular to the first rotation axis, and a gear housing (e.g., the gear housing 303 in FIG. 8B) connected to the gear shaft, and a switching unit (e.g., the switching unit 410 in FIG. 5) configured to contact the gear housing or to be spaced from the gear housing. When the switching unit is in a first state, a portion of the first driving force may be configured to be transmitted to the third gear, and when the switching unit is in a second state, the first gear may be configured to rotate independently of the third gear.

According to an embodiment, the switching unit may be configured to reduce or prevent rotation of the gear housing in the first state including the switching unit contacting the gear housing, and to rotate the first rotation axis together with the gear shaft and the at least one second gear in the second state including the switching unit being space apart from the gear housing.

According to an embodiment of the disclosure, an electronic device (e.g., the electronic device 200 in FIG. 3) may include a housing (e.g., the housing 202 in FIG. 3), a motor unit (e.g., the motor unit 500 in FIG. 7) connected to a first shaft (e.g., the first shaft 311 in FIG. 7), a second shaft (e.g., the second shaft 331 in FIG. 7) spaced apart from the first shaft, a switching unit (e.g., the switching unit 610 in FIG. 6) configured to control transmission of power generated by the motor unit from the first shaft to the second shaft by at least partially moving, a power transmission unit (e.g., the power transmission unit 300 in FIG. 6) configured to transmit the power generated by the motor unit to the second shaft using the first shaft, based on the movement of the switching unit, a display (e.g., the display 230 in FIG. 3) configured to be unfolded based on movement of the housing configured to at least partially move based on rotation of the second shaft, when the power generated by the motor unit is transmitted to the second shaft through the power transmission unit, a sensor module (e.g., the sensor module 176 in FIG. 1) configured to detect a user input provided to the electronic device, and a processor (e.g., the processor 120 in FIG. 1) configured to control the switching unit based on the user input.

The rollable electronic device including the switching unit of the disclosure described above is not limited to the above-described embodiments and drawings, and it will be apparent to those skilled in the art that various replacement, modifications, and variations can be made within the scope of the disclosure.

## Claims

1. An electronic device (200) comprising:
a housing (202) including a first housing (210) and a second housing (220) accommodating at least a portion of the first housing and configured to guide sliding of the first housing;
a display (230) configured to be at least partially foldable based on sliding of the first housing (210);
a motor unit (500) disposed within the housing;
a power transmission unit (300) disposed within the housing, and including a gear assembly (301) configured to receive at least a portion of a driving force generated by the motor unit and a gear housing (303) configured to rotate together with at least a portion of the gear assembly;
a switching unit (410, 420, 430) disposed within the housing and configured to control a rotation of the gear housing;
a sensor module (176) configured to detect at least one of an internal operation state of the electronic device, an external environmental state, or a user input provided to the electronic device; and
a processor (120) configured to adjust a connection state between the switching unit and the gear housing based on the state or input detected by the sensor module.

2. The electronic device (200) of claim 1, wherein the power transmission unit (300) includes a first gear (310) connected to the motor unit, at least one second gear (320) meshed with the first gear, a gear shaft (340) rotatably connected to the at least one second gear, and a third gear (330) meshed with the at least one second gear, and
wherein the gear housing is connected to the gear shaft.

3. The electronic device (200) of claim 1 or 2, wherein, in a first state in which the switching unit is connected to the gear housing:
the first gear is configured to rotate in a first rotation direction (R1), and
the third gear is configured to rotate in a second rotation direction (R2) opposite to the first rotation direction.

4. The electronic device (200) of any one of the preceding claims, wherein the processor is configured to, using the switching unit, switch the gear housing to a first state in which the gear housing is fixed to the power transmission unit or to a second state in which the gear housing is spaced apart from the switching unit and rotate with respect to at least a portion of the power transmission unit.

5. The electronic device (200) of any one of the preceding claims, wherein the power transmission unit includes:
a first gear (310) connected to the motor unit and configured to rotate around a first rotation axis,
at least one second gear (320) configured to be meshed with the first gear,
a gear shaft (340) rotatably connected to the at least one second gear and providing a second rotation axis perpendicular to the first rotation axis, and
a third gear (330) meshed with the second gear and configured to rotate around the first rotation axis,
wherein, in the first state, the at least one second gear is configured to rotate around the second rotation axis and the third gear is configured to receive a rotational force transmitted from the first gear through the at least one second gear, and
wherein, in the second state, the gear housing, the at least one second gear, and the gear shaft are configured to rotate around the first rotation axis, and the first gear and the third gear are configured to move independently.

6. The electronic device (200) of any one of the preceding claims, wherein the switching unit is configured to contact the gear housing or to be spaced apart from the gear housing.

7. The electronic device (200) of any one of the preceding claims, wherein the gear housing includes at least one recess (303a), and
wherein when the switching unit contacts the gear housing, at least a portion of the switching unit is accommodated in the at least one recess.

8. The electronic device (200) of any one of the preceding claims, wherein the switching unit includes:
a first motor (413) configured to generate a second driving force for moving at least a portion of the switching unit in a first direction,
a first part (411) configured to be slidable using the second driving force generated by the first motor, and
a second part (412) connected to the second housing to be rotatable based on sliding of the first part, the second part configured to contact the gear housing.

9. The electronic device (200) of any one of the preceding claims, wherein the switching unit includes:
a third area (421) connected to be rotatable around a third rotation axis (A3) with respect to the second housing and configured to contact the gear housing,
a fourth area (422) located opposite to the third area with respect to the third rotation axis,
a deformable member (423) connected to the fourth area and including a shape memory alloy, and
a power supply module (424) configured to provide a current to the deformable member, and
wherein the deformable member is configured to rotate at least a portion of the switching unit, when receiving the current from the power supply module.

10. The electronic device (200) of any one of the preceding claims, wherein the power transmission unit includes a pinion gear (350) configured to rotate by a driving force generated by the motor unit, and a rack gear (360) configured to be meshed with the pinion gear.

11. The electronic device (200) of any one of the preceding claims, further comprising a display support member (233) supporting at least a portion of the display,
wherein the motor unit is connected to the second housing, and the rack gear is connected to the display support member.

12. The electronic device (200) of any one of the preceding claims, further comprising a display support member (233) supporting at least a portion of the display,
wherein the rack gear is connected to the second housing, and the motor unit is connected to the display support member.

13. The electronic device (200) of any one of the preceding claims, wherein the sensor module includes at least one of a gyro sensor, an acceleration sensor, a pressure sensor, or a touch sensor, and
wherein the processor is configured to
determine whether the electronic device is dropped by using the sensor module, and
separate the switching unit from the gear housing when determining that the electronic device is in a drop state.

14. The electronic device (200) of any one of the preceding claims, wherein the sensor module includes a temperature sensor detecting an internal temperature of the electronic device, and
wherein the processor is configured to separate the switching unit from the gear housing, when the internal temperature is equal to or higher than a specified temperature.

15. The electronic device (200) of any one of the preceding claims, further comprising a battery (204) for supplying power to the motor unit and the processor,
wherein the processor is configured to separate the switching unit from the gear housing, when a remaining capacity of the battery is less than a specified capacity.

## Patentansprüche

1. Elektronische Vorrichtung (200), umfassend:
ein Gehäuse (202), das ein erstes Gehäuse (210) und ein zweites Gehäuse (220) beinhaltet, das zumindest einen Teil des ersten Gehäuses aufnimmt und dazu konfiguriert ist, ein Verschieben des ersten Gehäuses zu führen;
eine Anzeige (230), die dazu konfiguriert ist, basierend auf dem Verschieben des ersten Gehäuses (210) zumindest teilweise faltbar zu sein;
eine Motoreinheit (500), die innerhalb des Gehäuses angeordnet ist;
eine Energieübertragungseinheit (300), die innerhalb des Gehäuses angeordnet ist und eine Zahnradanordnung (301), die dazu konfiguriert ist, zumindest einen Teil einer durch die Motoreinheit erzeugten Antriebskraft aufzunehmen, und ein Zahnradgehäuse (303), das dazu konfiguriert ist, sich zusammen mit zumindest einem Teil der Zahnradanordnung zu drehen, beinhaltet;
eine Schalteinheit (410, 420, 430), die innerhalb des Gehäuses angeordnet ist und dazu konfiguriert ist, eine Drehung des Zahnradgehäuses zu steuern;
ein Sensormodul (176), das dazu konfiguriert ist, mindestens eines von einem internen Betriebszustand der elektronischen Vorrichtung, einem externen Umgebungszustand oder einer Benutzereingabe, die der elektronischen Vorrichtung bereitgestellt wird, zu erfassen; und
einen Prozessor (120), der dazu konfiguriert ist, einen Verbindungszustand zwischen der Schalteinheit und dem Zahnradgehäuse basierend auf dem Zustand oder der Eingabe, der oder die durch das Sensormodul erfasst wird, einzustellen.

2. Elektronische Vorrichtung (200) nach Anspruch 1, wobei die Energieübertragungseinheit (300) ein erstes Zahnrad (310), das mit der Motoreinheit verbunden ist, mindestens ein zweites Zahnrad (320), das mit dem ersten Zahnrad in Eingriff steht, eine Zahnradwelle (340), die drehbar mit dem mindestens einen zweiten Zahnrad verbunden ist, und ein drittes Zahnrad (330), das mit dem mindestens einen zweiten Zahnrad in Eingriff steht, beinhaltet, und
wobei das Zahnradgehäuse mit der Zahnradwelle verbunden ist.

3. Elektronische Vorrichtung (200) nach Anspruch 1 oder 2, wobei in einem ersten Zustand, in dem die Schalteinheit mit dem Zahnradgehäuse verbunden ist:
das erste Zahnrad dazu konfiguriert ist, sich in einer ersten Drehrichtung (R1) zu drehen, und
das dritte Zahnrad dazu konfiguriert ist, sich in einer zweiten Drehrichtung (R2) entgegengesetzt zur ersten Drehrichtung zu drehen.

4. Elektronische Vorrichtung (200) nach einem der vorhergehenden Ansprüche, wobei der Prozessor dazu konfiguriert ist, unter Verwendung der Schalteinheit das Zahnradgehäuse in einen ersten Zustand, in dem das Zahnradgehäuse an der Energieübertragungseinheit befestigt ist, oder in einen zweiten Zustand, in dem das Zahnradgehäuse von der Schalteinheit beabstandet ist und sich in Bezug auf mindestens einen Teil der Energieübertragungseinheit dreht, zu schalten.

5. Elektronische Vorrichtung (200) nach einem der vorhergehenden Ansprüche, wobei die Energieübertragungseinheit Folgendes beinhaltet:
ein erstes Zahnrad (310), das mit der Motoreinheit verbunden ist und dazu konfiguriert ist, sich um eine erste Drehachse zu drehen,
mindestens ein zweites Zahnrad (320), das dazu konfiguriert ist, mit dem ersten Zahnrad in Eingriff zu stehen,
eine Zahnradwelle (340), die drehbar mit dem mindestens einen zweiten Zahnrad verbunden ist und eine zweite Drehachse senkrecht zur ersten Drehachse bereitstellt, und
ein drittes Zahnrad (330), das mit dem zweiten Zahnrad in Eingriff steht und dazu konfiguriert ist, sich um die erste Drehachse zu drehen,
wobei in dem ersten Zustand das mindestens eine zweite Zahnrad dazu konfiguriert ist, sich um die zweite Drehachse zu drehen, und das dritte Zahnrad dazu konfiguriert ist, eine Drehkraft aufzunehmen, die von dem ersten Zahnrad durch das mindestens eine zweite Zahnrad übertragen wird, und
wobei in dem zweiten Zustand das Zahnradgehäuse, das mindestens eine zweite Zahnrad und die Zahnradwelle dazu konfiguriert sind, sich um die erste Drehachse zu drehen, und das erste Zahnrad und das dritte Zahnrad dazu konfiguriert sind, sich unabhängig voneinander zu bewegen.

6. Elektronische Vorrichtung (200) nach einem der vorhergehenden Ansprüche, wobei die Schalteinheit dazu konfiguriert ist, das Zahnradgehäuse zu berühren oder von dem Zahnradgehäuse beabstandet zu sein.

7. Elektronische Vorrichtung (200) nach einem der vorhergehenden Ansprüche, wobei das Zahnradgehäuse mindestens eine Aussparung (303a) beinhaltet und
wobei, wenn die Schalteinheit das Zahnradgehäuse berührt, zumindest ein Teil der Schalteinheit in der zumindest einen Aussparung untergebracht ist.

8. Elektronische Vorrichtung (200) nach einem der vorhergehenden Ansprüche, wobei die Schalteinheit Folgendes beinhaltet:
einen ersten Motor (413), der dazu konfiguriert ist, eine zweite Antriebskraft zu erzeugen, um zumindest einen Teil der Schalteinheit in eine erste Richtung zu bewegen,
ein erstes Teil (411), das dazu konfiguriert ist, unter Verwendung der zweiten Antriebskraft, die durch den ersten Motor erzeugt wird, verschiebbar zu sein, und
ein zweites Teil (412), das mit dem zweiten Gehäuse verbunden ist, um basierend auf dem Verschieben des ersten Teils drehbar zu sein, wobei das zweite Teil dazu konfiguriert ist, das Zahnradgehäuse zu berühren.

9. Elektronische Vorrichtung (200) nach einem der vorhergehenden Ansprüche, wobei die Schalteinheit Folgendes beinhaltet:
einen dritten Bereich (421), der so verbunden ist, dass er um eine dritte Drehachse (A3) in Bezug auf das zweite Gehäuse drehbar ist und dazu konfiguriert ist, das Zahnradgehäuse zu berühren,
einen vierten Bereich (422), der sich in Bezug auf die dritte Drehachse gegenüber dem dritten Bereich befindet, ein verformbares Element (423), das mit dem vierten Bereich verbunden ist und eine Formgedächtnislegierung beinhaltet, und
ein Energieversorgungsmodul (424), das dazu konfiguriert ist, dem verformbaren Element einen Strom bereitzustellen, und
wobei das verformbare Element dazu konfiguriert ist, zumindest einen Teil der Schalteinheit zu drehen, wenn es den Strom von dem Energieversorgungsmodul empfängt.

10. Elektronische Vorrichtung (200) nach einem der vorhergehenden Ansprüche, wobei die Energieübertragungseinheit ein Ritzel (350), das dazu konfiguriert ist, sich durch eine von der Motoreinheit erzeugte Antriebskraft zu drehen, und eine Zahnstange (360), die dazu konfiguriert ist, mit dem Ritzel in Eingriff zu stehen, beinhaltet.

11. Elektronische Vorrichtung (200) nach einem der vorhergehenden Ansprüche, ferner umfassend ein Anzeigeträgerelement (233), das mindestens einen Teil der Anzeige trägt,
wobei die Motoreinheit mit dem zweiten Gehäuse verbunden ist und die Zahnstange mit dem Anzeigeträgerelement verbunden ist.

12. Elektronische Vorrichtung (200) nach einem der vorhergehenden Ansprüche, ferner umfassend ein Anzeigeträgerelement (233), das mindestens einen Teil der Anzeige trägt,
wobei die Zahnstange mit dem zweiten Gehäuse verbunden ist und die Motoreinheit mit dem Anzeigeträgerelement verbunden ist.

13. Elektronische Vorrichtung (200) nach einem der vorhergehenden Ansprüche, wobei das Sensormodul mindestens eines von einem Gyrosensor, einem Beschleunigungssensor, einem Drucksensor oder einem Berührungssensor beinhaltet und
wobei der Prozessor dazu konfiguriert ist,
zu bestimmen, ob die elektronische Vorrichtung fallen gelassen wird, indem das Sensormodul verwendet wird, und die Schalteinheit von dem Zahnradgehäuse zu trennen, wenn bestimmt wird, dass sich die elektronische Vorrichtung in einem Fallzustand befindet.

14. Elektronische Vorrichtung (200) nach einem der vorhergehenden Ansprüche, wobei das Sensormodul einen Temperatursensor beinhaltet, der eine Innentemperatur der elektronischen Vorrichtung erfasst, und
wobei der Prozessor dazu konfiguriert ist, die Schalteinheit von dem Zahnradgehäuse zu trennen, wenn die Innentemperatur gleich oder höher als eine bestimmte Temperatur ist.

15. Elektronische Vorrichtung (200) nach einem der vorhergehenden Ansprüche, ferner umfassend eine Batterie (204) zum Zuführen von Energie an die Motoreinheit und den Prozessor,
wobei der Prozessor dazu konfiguriert ist, die Schalteinheit von dem Zahnradgehäuse zu trennen, wenn eine verbleibende Kapazität der Batterie geringer als eine bestimmte Kapazität ist.

## Revendications

1. Dispositif électronique (200) comprenant :
un boîtier (202) comprenant un premier boîtier (210) et un second boîtier (220) logeant au moins une partie du premier boîtier et configuré pour guider le coulissement du premier boîtier ;
un affichage (230) configuré pour être au moins partiellement pliable sur la base du coulissement du premier boîtier (210) ;
une unité de moteur (500) disposée à l'intérieur du boîtier ;
une unité de transmission de puissance (300) disposée à l'intérieur du boîtier, et comprenant un ensemble engrenage (301) configuré pour recevoir au moins une partie d'une force d'entraînement générée par l'unité de moteur et un boîtier d'engrenage (303) configuré pour tourner conjointement à au moins une partie de l'ensemble engrenage ;
une unité de commutation (410, 420, 430) disposée à l'intérieur du boîtier et configurée pour commander une rotation du boîtier d'engrenage ;
un module de capteur (176) configuré pour détecter au moins l'un d'un état de fonctionnement interne du dispositif électronique, d'un état environnemental externe ou d'une entrée d'utilisateur fournie au dispositif électronique ; et
un processeur (120) configuré pour ajuster un état de connexion entre l'unité de commutation et le boîtier d'engrenage sur la base de l'état ou de l'entrée détecté par le module de capteur.

2. Dispositif électronique (200) selon la revendication 1, dans lequel l'unité de transmission de puissance (300) comprend un premier engrenage (310) relié à l'unité de moteur, au moins un deuxième engrenage (320) engrené avec le premier engrenage, un arbre d'engrenage (340) relié de manière rotative à l'au moins un deuxième engrenage, et un troisième engrenage (330) engrené avec l'au moins un deuxième engrenage, et
dans lequel le boîtier d'engrenage est relié à l'arbre d'engrenage.

3. Dispositif électronique (200) selon la revendication 1 ou 2, dans lequel, dans un premier état dans lequel l'unité de commutation est connectée au boîtier d'engrenage :
le premier engrenage est configuré pour tourner dans un premier sens de rotation (R1), et
le troisième engrenage est configuré pour tourner dans un second sens de rotation (R2) opposé au premier sens de rotation.

4. Dispositif électronique (200) selon l'une quelconque des revendications précédentes, dans lequel le processeur est configuré pour, à l'aide de l'unité de commutation, commuter le boîtier d'engrenage vers un premier état dans lequel le boîtier d'engrenage est fixé à l'unité de transmission de puissance ou vers un second état dans lequel le boîtier d'engrenage est espacé de l'unité de commutation et tourne par rapport à au moins une partie de l'unité de transmission de puissance.

5. Dispositif électronique (200) selon l'une quelconque des revendications précédentes, dans lequel l'unité de transmission de puissance comprend :
un premier engrenage (310) relié à l'unité de moteur et configuré pour tourner autour d'un premier axe de rotation,
au moins un deuxième engrenage (320) configuré pour être engrené avec le premier engrenage,
un arbre d'engrenage (340) relié de manière rotative à l'au moins un deuxième engrenage et fournissant un deuxième axe de rotation perpendiculaire au premier axe de rotation, et
un troisième engrenage (330) engrené avec le deuxième engrenage et configuré pour tourner autour du premier axe de rotation,
dans lequel, dans le premier état, l'au moins un deuxième engrenage est configuré pour tourner autour du deuxième axe de rotation et le troisième engrenage est configuré pour recevoir une force de rotation transmise par le premier engrenage à travers l'au moins un deuxième engrenage, et
dans lequel, dans le second état, le boîtier d'engrenage, l'au moins un deuxième engrenage et l'arbre d'engrenage sont configurés pour tourner autour du premier axe de rotation, et le premier engrenage et le troisième engrenage sont configurés pour se déplacer indépendamment.

6. Dispositif électronique (200) selon l'une quelconque des revendications précédentes, dans lequel l'unité de commutation est configurée pour entrer en contact avec le boîtier d'engrenage ou pour être espacée du boîtier d'engrenage.

7. Dispositif électronique (200) selon l'une quelconque des revendications précédentes, dans lequel le boîtier d'engrenage comprend au moins un évidement (303a), et
dans lequel lorsque l'unité de commutation entre en contact avec le boîtier d'engrenage, au moins une partie de l'unité de commutation est logée dans l'au moins un évidement.

8. Dispositif électronique (200) selon l'une quelconque des revendications précédentes, dans lequel l'unité de commutation comprend :
un premier moteur (413) configuré pour générer une deuxième force d'entraînement pour déplacer au moins une partie de l'unité de commutation dans une première direction,
une première pièce (411) configurée pour être coulissante à l'aide de la deuxième force d'entraînement générée par le premier moteur, et
une seconde pièce (412) reliée au second boîtier de manière à pouvoir tourner en fonction du coulissement de la première pièce, la seconde pièce étant configurée pour venir au contact du boîtier d'engrenage.

9. Dispositif électronique (200) selon l'une quelconque des revendications précédentes, dans lequel l'unité de commutation comprend :
une troisième zone (421) reliée de manière à pouvoir tourner autour d'un troisième axe de rotation (A3) par rapport au second boîtier et configurée pour venir au contact du boîtier d'engrenage,
une quatrième zone (422) située à l'opposé de la troisième zone par rapport au troisième axe de rotation, un élément déformable (423) relié à la quatrième zone et comprenant un alliage à mémoire de forme, et
un module d'alimentation électrique (424) configuré pour fournir un courant à l'élément déformable, et
dans lequel l'élément déformable est configuré pour faire tourner au moins une partie de l'unité de commutation, lors de la réception du courant provenant du module d'alimentation électrique.

10. Dispositif électronique (200) selon l'une quelconque des revendications précédentes, dans lequel l'unité de transmission de puissance comprend un engrenage à pignon (350) configuré pour tourner sous l'effet d'une force d'entraînement générée par l'unité de moteur, et un engrenage à crémaillère (360) configuré pour être engrené avec l'engrenage à pignon.

11. Dispositif électronique (200) selon l'une quelconque des revendications précédentes, comprenant en outre un élément de support d'affichage (233) supportant au moins une partie de l'affichage,
dans lequel l'unité de moteur est reliée au second boîtier, et l'engrenage à crémaillère est relié à l'élément de support d'affichage.

12. Dispositif électronique (200) selon l'une quelconque des revendications précédentes, comprenant en outre un élément de support d'affichage (233) supportant au moins une partie de l'affichage,
dans lequel l'engrenage à crémaillère est relié au second boîtier, et l'unité de moteur est reliée à l'élément de support d'affichage.

13. Dispositif électronique (200) selon l'une quelconque des revendications précédentes, dans lequel le module de capteur comprend au moins l'un d'un capteur gyroscopique, d'un capteur d'accélération, d'un capteur de pression ou d'un capteur tactile, et
dans lequel le processeur est configuré pour
déterminer si le dispositif électronique est tombé en utilisant le module de capteur, et
séparer l'unité de commutation du boîtier d'engrenage lors de la détermination que le dispositif électronique est dans un état de chute.

14. Dispositif électronique (200) selon l'une quelconque des revendications précédentes, dans lequel le module de capteur comprend un capteur de température détectant une température interne du dispositif électronique, et
dans lequel le processeur est configuré pour séparer l'unité de commutation du boîtier d'engrenage, lorsque la température interne est supérieure ou égale à une température spécifiée.

15. Dispositif électronique (200) selon l'une quelconque des revendications précédentes, comprenant en outre une batterie (204) pour alimenter l'unité de moteur et le processeur,
dans lequel le processeur est configuré pour séparer l'unité de commutation du boîtier d'engrenage, lorsqu'une capacité restante de la batterie est inférieure à une capacité spécifiée.
